(19) Europäisches Patentamt
European Patent Office
Office européen des brevets

(11) **EP 2 373 155 B1**

(12) **EUROPÄISCHE PATENTSCHRIFT**

(45) Veröffentlichungstag und Bekanntmachung des Hinweises auf die Patenterteilung:
**26.08.2015 Patentblatt 2015/35**

(21) Anmeldenummer: **09759674.6**

(22) Anmeldetag: **18.11.2009**

(51) Int Cl.:
*G01F 11/28* (2006.01)  *A01J 5/01* (2006.01)
*G01F 13/00* (2006.01)

(86) Internationale Anmeldenummer:
**PCT/EP2009/008206**

(87) Internationale Veröffentlichungsnummer:
**WO 2010/057621 (27.05.2010 Gazette 2010/21)**

(54) **VORRICHTUNG UND VERFAHREN ZUM MESSEN EINER VON EINEM TIER BEI EINEM MELKVORGANG ABGEGEBENEN MILCHMENGE**

DEVICE AND METHOD FOR MEASUREMENT OF A MILK VOLUME YIELDED FROM AN ANIMAL DURING A MILKING PROCESS

DISPOSITIF ET PROCÉDÉ POUR MESURER LA QUANTITÉ DE LAIT FOURNIE PAR UN ANIMAL LORS D'UNE TRAITE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **18.11.2008 DE 102008057819**

(43) Veröffentlichungstag der Anmeldung:
**12.10.2011 Patentblatt 2011/41**

(73) Patentinhaber: **Lactocorder AG**
**9052 Niederteufen (CH)**

(72) Erfinder: **HOEFELMAYR, Tilman**
**CH-9052 Niederteufen (CH)**

(74) Vertreter: **Grünecker Patent- und Rechtsanwälte PartG mbB**
**Leopoldstraße 4**
**80802 München (DE)**

(56) Entgegenhaltungen:
**WO-A1-01/71292          WO-A1-82/03965**
**DE-A1-102004 025 059    US-B1- 6 497 143**

**Beschreibung**

Die vorliegende Erfindung bezieht sich auf eine Vorrichtung und ein Verfahren zum Messen einer von einem Tier bei einem Melkvorgang abgegebenen Milchmenge.

In der Milchwirtschaft kann es von Vorteil sein, die Milchmenge, die von einem Tier, beispielsweise einer Kuh, einem Schaf oder einer Ziege bei einem Melkvorgang abgegeben wird, zu messen. Dadurch kann die Leistung der einzelnen Tiere überwacht werden, und die Zusammensetzung der Herde, sowie die Fütterung der Tiere können angepasst werden, um einen möglichst hohen Milchertrag zu erzielen.

Eine Vorrichtung zur Bestimmung der Milchleistung von Kühen nach dem Stand der Technik ist beispielsweise in der DE 3118865 A1 beschrieben. Diese Vorrichtung wird im Folgenden mit Bezug auf Fig. 1 genauer erläutert.

Die Vorrichtung 100 umfasst eine Leitung 111, über die Milch zusammen mit Luft angesaugt wird. Die Milch wird in einem Auffangbehälter 113 aufgefangen, in den die Leitung 111 geführt ist. Am Boden des Auffangbehälters 111 ist eine Auslaufleitung 114 vorgesehen. Die Auslaufleitung 114 mündet in eine Sammelleitung 112. Kurz vor der Mündung der Auslaufleitung 114 befindet sich ein Magnetventil 115. An der Oberseite des Auffangbehälters 113 ist eine Rohrleitung 116 angeschlossen, die den Unterdruck in der Sammelleitung 112 über den Auffangbehälter 113 an die Absaugleitung 111 weiterleitet.

Beim Betrieb der Vorrichtung 100 wird über Elektroden 117, 119 gemessen, ob der Füllstand im Auffangbehälter die Höhe der Elektrode 119 überschreitet oder die Höhe der Elektrode 117 unterschreitet. Sobald die Milch die Elektrode 119 erreicht, wird das Magnetventil 115 von einer Steuereinheit 120 geöffnet. Sobald die Elektrode 117 freiliegt, wird das Magnetventil 115 geschlossen. Die Zeit, während der das Magnetventil 115 geöffnet ist, wird gemessen und aus der gemessenen Zeit eine von dem gemolkenen Tier abgegebene Milchmenge berechnet.

Die Leitung 114 der Vorrichtung 100 ist so ausgelegt, dass der Müchfluss, der bei geöffnetem Magnetventil 115 durch die Auslaufleitung 114 fließt, größer als der beim Melkvorgang auftretende maximale Milchfluss ist. Bei Kühen können Milchflüsse von bis zu 12 kg/min auftreten. Ist der Milchfluss wesentlich geringer, ist das Magnetventil 115 nur während sehr kurzer Zeiten geöffnet, und es können während eines Melkvorgangs nur wenige Öffnungs- und Schließvorgänge des Magnetventils 115 auftreten. Dadurch kann die Messung von geringen Milchflüssen erschwert sein. Dies kann insbesondere dann der Fall sein, wenn Tiere, die wesentlich geringere Milchflüsse als 12 kg/min abgeben, wie zum Beispiel Schafe oder Ziegen, gemolken werden. Auch am Anfang und am Ende eines Melkvorgangs können deutlich kleinere Milchflüsse auftreten als während eines mittleren Zeitabschnitts des Melkvorgangs. Bei Kühen kann als Grenze zwischen Melken und Blindmelken (Melken, ohne dass substantiell Milch ermolken wird) ein Milchfluß von 200 g/min angesehen werden. Das bedeutet, dass bei Kühen eine Messung kleiner Milchflüsse bis hinab zu 0,2 kg/min als sinnvoll angesehen werden kann.

Außerdem wird durch die Vorrichtung 100 lediglich die gesamte von dem Tier abgegebene Milchmenge bestimmt. Die Vorrichtung 100 ist aufgrund ihrer diskontinuierlichen Arbeitsweise nicht dafür geeignet, Veränderungen des Milchflusses während des Melkvorgangs zu messen.

In der Vorrichtung 100 wird die Auslaufleitung 114 relativ lang gehalten, um Veränderungen des Milchflusses durch die Auslaufleitung 114, die durch die Schwankungen des Füllstands des Auffangbehälters 113 verursacht werden, gering zu halten. Dadurch ergibt sich eine relativ große Bauhöhe der Vorrichtung 100, wodurch die Transportabilität der Vorrichtung 100 eingeschränkt wird.

Weitere Milchmengenmeßvorrichtungen nach dem Stand der Technik sind in den Druckschriften US 3,919,975 A, DE 31 01 302 A1 und EP 0 382 852 A1 beschrieben. Eine Milchmengenmeßvorrichtung gemäß dem Oberbegriff von Anspruch 1 geht aus US 6,497,143 B1 hervor.

Es ist eine Aufgabe der vorliegenden Erfindung, eine Vorrichtung und ein Verfahren bereitzustellen, die eine Messung stark unterschiedlicher Milchflüsse ermöglichen.

Es ist eine weitere Aufgabe der vorliegenden Erfindung, eine Vorrichtung und ein Verfahren bereitzustellen, die eine Messung von Milchflüssen, die während des Melkvorgangs auftreten, ermöglichen.

Es ist eine weitere Aufgabe der vorliegenden Erfindung, eine transportable Vorrichtung zum Messen einer von einem Tier bei einem Melkvorgang abgegebenen Milchmenge bereitzustellen.

Eine erfindungsgemäße Vorrichtung zum Messen einer von einem Tier bei einem Melkvorgang abgegebenen Milchmenge umfasst einen Behälter, eine Zuleitungseinheit, eine Ableitungseinheit, eine Füllstandsmessvorrichtung, eine Steuereinheit und eine Auswerteeinheit. Die Zuleitungseinheit ist zum Zuführen von Milch in den Behälter ausgebildet und mit einem Melkzeug einer Melkmaschine verbindbar. Die Ableitungseinheit ist zum Ableiten von Milch aus dem Behälter ausgebildet und mit einer Melkleitung der Melkmaschine, die mit einem Melkvakuum beaufschlagbar ist, verbindbar. Die Ableitungseinheit weist Mittel zum Verändern einer Größe einer Abflussöffnung, durch welche die Milch beim Ableiten aus dem Behälter strömt, auf. Es sind mindestens zwei Größen der Abflussöffnung, die einen Durchfluss von Milch durch die Abflussöffnung zulassen, einstellbar. Die Füllstandsmessvorrichtung ist dafür ausgebildet, einen Füllstand der Milch in dem Behälter zu messen. Die Steuereinheit ist dafür ausgebildet, die Mittel zum Verändern der Größe der Abflussöffnung in Abhängigkeit von dem von der Füllstandsmessvorrichtung bestimmten Füllstand der Milch in dem Behälter zu steuern, um eine Größe der Abflussöffnung derart einzustellen, dass der Füllstand in einem vorgegebenen Bereich bleibt. Die Auswerteeinheit ist dafür ausgebildet, aus der eingestellten Größe der Abflussöffnung und dem von der Füllstandsmessvorrichtung gemessenen Füllstand einen Milchfluss in den Behälter zu berechnen.

Durch die Einstellung des Füllstands in dem vorgegebenen Bereich, die mit Hilfe der Steuereinheit, der Füllstandsmessvorrichtung und der Mittel zum Verändern der Größe der Abflussöffnung durchgeführt werden kann, kann die Vorrichtung bei unterschiedlichen Milchflüssen unter ähnlichen Betriebsbedingungen verwendet werden. Damit kann die Vorrichtung nicht nur beim Melken von Kühen, bei denen Milchflüsse von bis zu 12 kg/min auftreten können, sondern auch beim Melken anderer Tiere, beispielsweise von Schafen und Ziegen, bei denen am Melkende relativ geringe Flüsse von 20 bis 50 g/min auftreten können, eingesetzt werden.

Der Abfluss aus dem Behälter hängt im Wesentlichen von dem hydrostatischen Druck, den die Milch an der Auslassöffnung aufweist, und der wiederum eine Funktion des Füllstands ist, sowie von der Größe der Auslassöffnung ab, und kann aus diesen Größen berechnet und/oder mit Hilfe einer Eichung bestimmt werden. Der Milchfluss in den Behälter ist im wesentlichen gleich einer Summe des Abflusses aus dem Behälter und des Anstiegs der Milchmenge im Behälter pro Zeiteinheit. Der Anstieg der Milchmenge im Behälter, der bei sinkendem Füllstand auch negativ werden kann, kann bei bekannter Form des Behälters aus der zeitlichen Änderung des Füllstands berechnet werden. Dadurch kann der Milchfluss in den Behälter während des Melkvorgangs gemessen werden.

In manchen Ausführungsformen ist die Steuereinheit dafür ausgelegt, die Abflußöffnung zu vergrößern, wenn der Füllstand des Behälters einen vorgegebenen oberen Schwellwert überschreitet, und die Abflußöffnung zu verkleinern, wenn der Füllstand einen vorgegebenen unteren Schwellwert unterschreitet. Die Steuereinheit kann dafür ausgelegt sein, beim Überschreiten des oberen Schwellwerts und/oder beim Unterschreiten des unteren Schwellwerts auf Grundlage des von der Auswerteeinheit berechneten Milchflusses zu bestimmen, ob sich bei einer der mindestens zwei Größen der Abflußöffnung ein Gleichgewicht zwischen dem Milchfluß in den Behälter und dem Milchfluß aus dem Behälter heraus einstellt, und, falls dies der Fall ist, diese Größe der Abflußöffnung einzustellen.

Durch die Vergrößerung der Abflußöffnung beim Überschreiten des oberen Schwellwerts und die Verkleinerung der Abflußöffnung beim Unterschreiten des unteren Schwellwerts kann der Füllstand in einem Wertebereich gehalten werden, bei dem präzise Messungen durchgeführt werden können. Durch die Einstellung einer Größe der Abflußöffnung, bei der sich ein Gleichgewicht zwischen dem Milchfluß in den Behälter und dem Milchfluß aus dem Behälter heraus einstellt, kann eine Anzahl notwendiger Einstellvorgänge der Größe der Abflußöffnung verringert werden.

In manchen Ausführungsformen der Erfindung können die Mittel zum Verändern der Größe der Abflußöffnung derart ausgebildet sein, dass drei oder mehr verschiedene Größen der Abflußöffnung, die einen Durchfluß von Milch durch die Abflußöffnung zulassen, einstellbar sind. Durch Bereitstellen von mehr als zwei möglichen Größen der Abflußöffnung kann die Einstellung eines Gleichgewichts zwischen dem Milchfluß in den Behälter und dem Milchfluß aus dem Behälter heraus erleichtert werden, da mehr Möglichkeiten zum Anpassen der Größe der Abflußöffnung an den momentanen Milchfluß in den Behälter vorhanden sind.

In manchen Ausführungsformen können mindestens eine oder alle der einstellbaren Größen der Abflußöffnung, die einen Durchfluß von Milch durch die Abflußöffnung zulassen, derart ausgelegt sein, dass sich bei einem Milchfluß in den Behälter in einem Teilbereich eines Bereichs von 0,5 kg/min bis 12 kg/min ein Gleichgewicht zwischen dem Milchfluß in den Behälter und dem Milchfluß aus dem Behälter bei einem Füllstand in dem vorgegebenen Bereich einstellt. Eine Messung von Milchflüssen in einem Bereich von 0,5 kg/min bis 12 kg/min ist bei der Messung der von einer Kuh abgegebenen Milchmenge oft erforderlich. Durch Bereitstellen von einer oder mehreren einstellbaren Größen der Abflußöffnung, die die Einstellung eines Gleichgewichts in einem Teilbereich dieses für Kühe besonders relevanten Bereichs ermöglichen, kann erreicht werden, dass bei der Messung der von einer Kuh abgegebenen Milchmenge während relativ langer Zeiträume in einem Gleichgewichtszustand zwischen dem Zufluß in den Behälter und dem Abfluß aus dem Behälter gearbeitet werden kann, so dass eine besondere geringe Anzahl von Schaltvorgängen, bei denen die Größe der Abflußöffnung geändert wird, erforderlich ist. Dadurch kann im Fall einer elektrisch betriebenen Vorrichtung der Stromverbrauch der Vorrichtung verringert werden.

Die Auswerteeinheit kann ferner dafür ausgelegt sein, durch zeitliche Integration eines aus der Größe der Abflussöffnung und dem Füllstand berechneten Milchflusses aus dem Behälter heraus eine von dem Tier bei dem Melkvorgang abgegebene Gesamtmilchmenge zu bestimmen. Da der Milchfluss aus dem Behälter heraus in manchen Ausführungsformen mit größerer Genauigkeit bestimmt werden kann als der Milchfluss in den Behälter hinein, kann so eine besonders genaue Messung der von dem Tier abgegebenen Gesamtmilchmenge erreicht werden.

In manchen Ausführungsformen können die Mittel zum Verändern der Größe der Abflussöffnung eine Scheibe mit mindestens zwei Öffnungen unterschiedlicher Größe umfassen. Die Scheibe ist vor einer Öffnung der Ableitungseinheit angeordnet und relativ zur Öffnung der Ableitungseinheit derart beweglich, dass jede der mindestens zwei Öffnungen der Scheibe durch Bewegen der Scheibe vor die Öffnung der Ableitungseinheit bringbar ist, so dass die Milch beim Ableiten aus dem Behälter durch eine der mindestens zwei Öffnungen der Scheibe, die sich vor der Öffnung der Ableitungseinheit befindet, strömt. Außerdem kann ein Scheibenantrieb zum Bewegen der Scheibe relativ zu der Öffnung der Ableitungseinheit vorgesehen sein.

Die Größe der Abflussöffnung kann somit eingestellt werden, indem eine der mindestens zwei Öffnungen, die eine gewünschte Größe hat, vor die Öffnung der Ableitungseinheit gebracht wird. Dadurch kann die Größe der Abflussöffnung in diskreten Intervallen eingestellt werden, wodurch eine hohe Genauigkeit der eingestellten Größe erreicht werden kann.

In manchen Ausführungsformen ist die Scheibe um eine zu einer Unterseite der Scheibe senkrechte Achse drehbar. Die mindestens zwei Öffnungen der Scheibe sind um die Achse herum angeordnet, und die Unterseite der Scheibe berührt einen Rand der Öffnung der Ableitungseinheit.

Da für die Drehung der Scheibe ein relativ geringer Energieaufwand notwendig ist, insbesondere wenn sich Milch, die relativ gute Schmiereigenschaften hat, auf der Unterseite der Scheibe und dem Rand der Öffnung befindet, kann der Stromverbrauch der Vorrichtung gering gehalten werden, was einen Batteriebetrieb mit kleinen und leichten Batterien ermöglicht, und es kann ein relativ schwacher und damit leichter Scheibenantrieb verwendet werden. Dadurch kann die Vorrichtung handlich und robust ausgeführt werden.

Der Behälter kann eine vertikale Richtung aufweisen. Zumindest in einem Bereich des Behälters zwischen einem minimalen Füllstand und einem maximalen Füllstand kann eine Querschnittsfläche eines Innenraums des Behälters in jeder Ebene, die zu der vertikalen Richtung senkrecht ist und den Behälter innerhalb des Bereichs schneidet, konstant sein, wobei die Achse, um die die Scheibe drehbar ist, zu der vertikalen Richtung des Behälters geneigt ist.

Durch die vertikale Richtung des Behälters, die durch die Konstanz der Querschnittsfläche zwischen dem minimalen und dem maximalen Füllstand definiert wird, und die zum Beispiel im Fall eines zylindrischen Behälters die Zylinderachse sein kann, wird eine Standardorientierung des Behälters während des Betriebs der Vorrichtung, bei der die vertikale Richtung lotrecht ist, festgelegt. Durch die Neigung der Scheibe kann ein Volumen in der Nähe der Auslassöffnung bereitgestellt werden, in dem sich nur ein geringes Restvolumen Milch ansammeln kann. Dadurch kann eine vollständige Entleerung des Behälters am Ende des Melkvorgangs erleichtert werden.

In manchen Ausführungsformen kann die Achse, um die die Scheibe drehbar ist, senkrecht zu der vertikalen Richtung des Behälters sein. Dadurch kann die Ableitungseinheit an der Seitenwand des Behälters angebracht werden, wodurch eine Bauhöhe der Vorrichtung verringert werden kann.

In manchen Ausführungsformen weist die Scheibe einen Bereich auf, in dem sich keine Öffnung befindet, und die Scheibe ist relativ zu der Öffnung der Ableitungseinheit derart beweglich, dass der Bereich der Scheibe, in dem sich keine Öffnung befindet, durch Bewegen der Scheibe vor die Öffnung der Ableitungseinheit gebracht werden kann, um die Öffnung der Ableitungseinheit zu verschließen.

Dadurch kann der Abfluss von Flüssigkeit aus dem Behälter im Wesentlichen vollständig verhindert werden. Dies kann zur Messung von relativ kleinen Milchflüssen eingesetzt werden, die z.B. am Ende des Melkvorgangs bei Schafen und Ziegen auftreten können. Bei kleinen Milchflüssen kann der Abfluss aus dem Behälter im Wesentlichen vollständig verhindert werden, und der Milchfluss kann aus dem Anstieg des Füllstands im Behälter bestimmt werden. Beim Melken von Tieren, die beim Melkvorgang eine Gesamtmilchmenge abgeben, die kleiner als das Volumen des Behälters der Vorrichtung ist, kann die Abflussöffnung auch während des gesamten Melkvorgangs geschlossen bleiben. Bei kleinen Milchflüssen kann durch die Messung mit geschlossener Abflussöffnung im Vergleich zur Messung mit geöffneter Abflussöffnung eine verbesserte Messgenauigkeit erzielt werden.

Die Möglichkeit, die Öffnung der Ableitungseinheit im Wesentlichen vollständig zu schließen, kann auch bei der Reinigung der Vorrichtung eingesetzt werden, um den Behälter abwechselnd bei geschlossener Abflussöffnung in Wesentlichen vollständig mit einer Reinigungsflüssigkeit, z.B. Wasser, zu füllen und anschließend durch Öffnen der Abflussöffnung zu leeren. Dadurch kann auch mit relativ geringen Wassermengen eine effektive Reinigung der Vorrichtung erreicht werden.

Der Bereich der Scheibe, in dem sich keine Öffnung befindet, kann neben der größten der mindestens zwei Öffnungen angeordnet sein. Dadurch kann schnell zwischen einer verschlossenen Abflussöffnung und einer maximal geöffneten Abflussöffnung umgeschaltet werden, was ein schnelles Entleeren des Behälters nach Beendigung des Melkvorgangs und bei der Reinigung der Vorrichtung ermöglicht.

In manchen Ausführungsformen weist die Scheibe mehrere Öffnungen auf, deren Größe derart ausgebildet ist, dass sich Durchflussraten der Milch durch jeweils zwei benachbarte Öffnungen bei einem vorgegebenen Füllstand des Behälters um eine vorgegebene Durchflussratendifferenz unterscheiden.

Die Durchflussratendifferenz zwischen zwei benachbarten Öffnungen hat einen Einfluss auf eine Reaktionszeit, innerhalb der entschieden werden muss, ob die momentane Größe der Abflussöffnung beibehalten wird, oder ob eine größere oder kleinere Größe der Abflussöffnung eingestellt werden soll, indem die Scheibe so bewegt wird, dass eine zur aktuell verwendeten Öffnung benachbarte Öffnung der Scheibe vor die Öffnung der Ableitungseinheit gebracht wird. Wenn die Differenz der Durchflussraten zwischen benachbarten Öffnungen den gleichen Wert hat, ist die Reaktionszeit unabhängig vom Milchfluss in den Behälter. Dadurch kann die Steuerung der Vorrichtung vereinfacht werden.

Ein Verhältnis zwischen einer Differenz einer Milchmenge in dem Behälter bei maximalem Füllstand und einer Milchmenge im Behälter bei minimalem Füllstand einerseits und der Durchflussratendifferenz andererseits kann größer als ungefähr 20 Sekunden sein.

Wenn bei minimalem Füllstand des Behälters die Größe der Abflussöffnung um eine Stufe verkleinert wird, ist die Zeit bis zum Erreichen des maximalen Füllstands, bei der wieder auf eine größere Öffnung umgeschaltet wird, damit der Füllstand innerhalb eines messbaren Bereichs bleibt, zumindest annähernd durch das oben angegebene Verhältnis bestimmt. Entsprechend ist die Zeit bis zum Erreichen des minimalen Füllstands beim Umschalten auf eine größere Öffnung bei maximalem Füllstand ebenfalls zumindest annähernd durch dieses Verhältnis bestimmt. Wenn das Verhältnis größer als ungefähr 20 Sekunden ist, kann die Zeit zwischen zwei aufeinanderfolgenden Schaltvorgängen größer als ungefähr 20 Sekunden sein, so dass ein schnelles Umschalten, das zu einem hohen Energieverbrauch der Vorrichtung führen könnte, vermieden werden kann.

Die Vorrichtung kann einen Neigungssensor umfassen, und die Auswerteeinheit kann dafür ausgelegt sein, eine Korrektur des berechneten Milchflusses auf Grundlage der vom Neigungssensor gemessenen Neigung durchzuführen. Dadurch können Verfälschungen der Messung des Milchflusses durch ein Schräghalten der Vorrichtung verringert werden.

In manchen Ausführungsformen kann die Ableitungseinheit einen Sammelraum umfassen, der einen ersten Einlass, der mit der Auslassöffnung verbunden ist, einen zweiten Einlass, der mit der Bypassöffnung verbunden ist und einen Auslass, der mit der Melkleitung der Melkmaschine verbindbar ist, umfasst. Die Vorrichtung kann ferner eine Einrichtung zum Verschließen des Auslasses umfassen.

Durch das Verschließen des Auslasses des Sammelraums kann der Fluss von Luft und Milch durch die Vorrichtung unterbrochen werden, wodurch der Melkvorgang beendet wird. Die Beendigung des Melkvorgangs kann so mit Hilfe der Vorrichtung zum Messen der von dem Tier beim Melken abgegebenen Milchmenge durchgeführt werden, wodurch zusätzliche Einrichtungen wie zum Beispiel ein Vakuumabsperrventil oder eine pneumatische Schlauchklemme nicht mehr benötigt werden.

Ein erfindungsgemäßes Verfahren zum Messen einer von einem Tier bei einem Melkvorgang abgegebenen Milchmenge umfasst ein Zuführen der von dem Tier bei dem Melkvorgang abgegebenen Milch in einen Behälter. Der Füllstand der Milch in dem Behälter wird gemessen. Die Größe einer Abflussöffnung, durch die Milch aus dem Behälter strömen kann, wird in Abhängigkeit von dem gemessenen Füllstand der Milch in dem Behälter verändert. Dabei wird eine Abflussöffnung verwendet, die derart ausgebildet ist, dass mindestens zwei verschiedene Größen der Abflussöffnung, die einen Durchfluss von Milch durch die Abflussöffnung zulassen, einstellbar sind. Die Größe der Abflussöffnung wird derart eingestellt, dass der Füllstand der Milch in dem Behälter in einem vorgegebenen Bereich bleibt. Der Milchfluss in den Behälter wird aus der eingestellten Größe der Abflussöffnung und dem von der Füllstandsmessvorrichtung gemessenen Füllstand berechnet.

In manchen Ausführungsformen wird die Größe der Abflußöffnung vergrößert, wenn der Füllstand des Behälters einen vorgegebenen oberen Schwellwert überschreitet, und die Größe der Abflußöffnung wird verkleinert, wenn der Füllstand des Behälters einen vorgegebenen unteren Schwellwert unterschreitet. Beim Überschreiten des oberen Schwellwerts und/oder beim Unterschreiten des unteren Schwellwerts wird auf Grundlage des berechneten Milchflusses in den Behälter bestimmt, ob sich bei einer der mindestens zwei Größen der Abflußöffnung ein Gleichgewicht zwischen dem Milchfluß in den Behälter und dem Milchfluß aus dem Behälter einstellt. Falls dies der Fall ist, wird diese Größe der Abflußöffnung eingestellt.

Die Abflußöffnung kann dabei derart ausgebildet sein, dass drei oder mehr verschiedene Größen der Abflußöffnung, die einen Durchfluß von Milch durch die Abflußöffnung zulassen, einstellbar sind.

Mindestens eine oder alle der einstellbaren Größen der Abflußöffnung, die einen Durchfluß von Milch durch die Abflußöffnung zulassen, können in manchen Ausführungsformen derart ausgelegt sein, dass sich bei einem Milchfluß in den Behälter in einem Teilbereich eines Bereichs von 0,5 kg/min bis 12 kg/min ein Gleichgewicht zwischen dem Milchfluß in den Behälter und dem Milchfluß aus dem Behälter bei einem Füllstand in dem vorgegebenen Bereich einstellt.

Es kann außerdem durch zeitliche Integration eines aus der Größe der Abflussöffnung und dem Füllstand berechneten Milchflusses aus dem Behälter heraus eine von dem Tier bei dem Melkvorgang abgegebene Gesamtmilchmenge bestimmt werden.

Das Berechnen des Milchflusses kann ein Bestimmen einer zeitlichen Änderung der Milchmenge in dem Behälter auf Grundlage einer zeitlichen Änderung des Füllstands und ein Bestimmen einer Abflussrate aus dem Behälter auf Grundlage der Größe der Abflussöffnung und des Füllstands umfassen, und es kann eine Summe der zeitlichen Änderung der Milchmenge in dem Behälter und der Abflussrate berechnet werden.

Die Neigung des Behälters kann gemessen werden und es kann eine Korrektur des gemessenen Milchflusses auf Grundlage der gemessenen Neigung durchgeführt werden.

Ausführungsformen der Erfindung werden mit Bezug auf die beigefügten Zeichnungen beschrieben. Es zeigen:

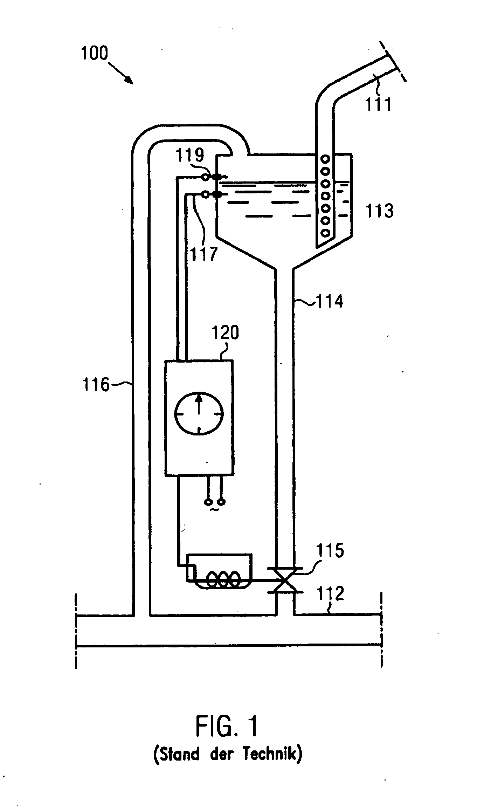

Fig. 1 eine schematische Skizze einer Vorrichtung zur Bestimmung der Milchleistung von Kühen nach dem Stand der Technik;

Fig. 2 eine schematische Querschnittsansicht einer Vorrichtung zum Messen einer von einem Tier bei einem Melkvorgang abgegebenen Milchmenge gemäß einer Ausführungsform der vorliegenden Erfindung;

Fig. 3 eine schematische Perspektivansicht einer Vorrichtung zum Messen einer von einem Tier bei einem Melkvorgang abgegebenen Milchmenge gemäß einer Ausführungsform der vorliegenden Erfindung;

Fig. 4 eine schematische Skizze einer Scheibe, die in Mitteln zum Verändern einer Größe einer Ausflussöffnung in einer Vorrichtung gemäß der vorliegenden Erfindung verwendet werden kann;

Fig. 5 eine schematische Querschnittsansicht einer Vorrichtung zum Messen einer von einem Tier bei einem Melkvorgang abgegebenen Milchmenge gemäß einer weiteren Ausführungsform der vorliegenden Erfindung;

Fig. 6a zeigt eine schematische Draufsicht auf Mittel zum Verändern einer Größe einer Ausflussöffnung in einer Vorrichtung gemäß einer Ausführungsform der vorliegenden Erfindung;

Fig. 6b und 6c zeigen schematische Querschnittsansichten der in Fig. 6a dargestellten Mitteln zum Verändern der Größe einer Ausflussöffnung; und

Fig. 7 zeigt eine schematische Draufsicht auf Mittel zum Verändern der Größe einer Ausflussöffnung in einer Vorrichtung gemäß einer Ausführungsform der vorliegenden Erfindung.

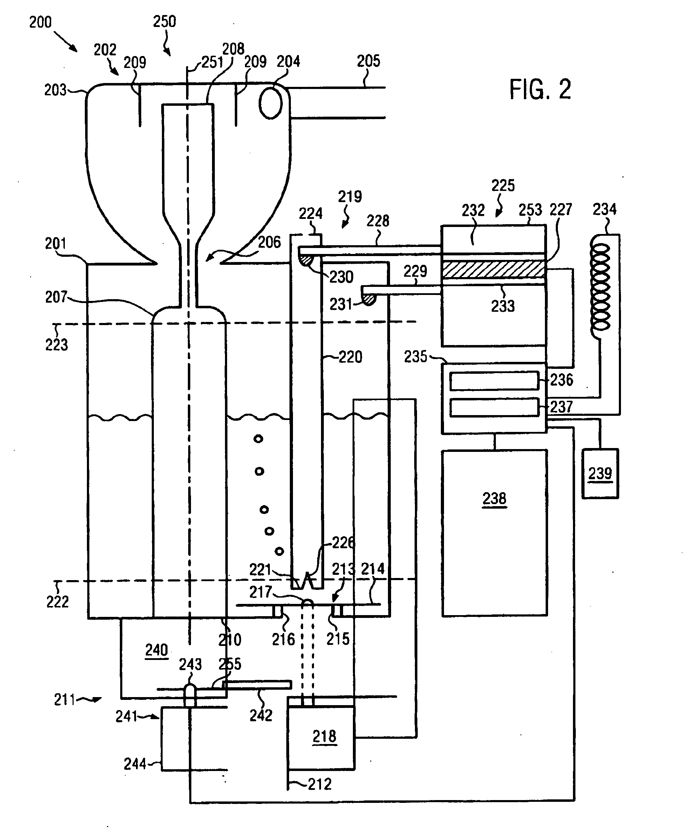

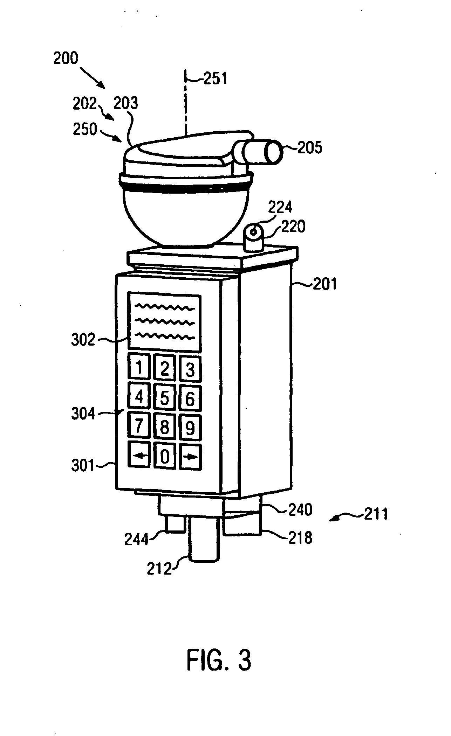

Fig. 2 zeigt eine schematische Querschnittsansicht einer Vorrichtung 200 zum Messen einer von einem Tier bei einem Melkvorgang abgegebenen Milchmenge gemäß einer Ausführungsform der vorliegenden Erfindung. Eine schematische Perspektivansicht der Vorrichtung 200 ist in Fig. 3 gezeigt.

Die Vorrichtung 200 umfasst einen Behälter 201, der zum Aufnehmen von Milch geeignet ist.

Außerdem umfasst die Vorrichtung 200 eine Zuleitungseinheit 202, die zum Zuführen von Milch in den Behälter 201 ausgebildet ist. Die Zuleitungseinheit 202 ist durch einen Anschluss 205 mit einem Melkzeug einer Melkmaschine verbindbar. Dadurch kann der Zuleitungseinheit 202 ein Gemisch aus Milch und Luft von der Melkmaschine zugeführt werden.

Die Zuleitüngseinheit 202 kann in manchen Ausführungsformen einen Zentrifugalkopf 250 umfassen, der zum Trennen der von der Melkmaschine aus zugeführten Luft von der Milch geeignet ist.

Der Zentrifugalkopf 250 umfasst einen Becher 203, der eine im Wesentlichen rotationssymmetrische Form mit einer Symmetrieachse 251 aufweisen kann. Der Anschluss 205 endet in einer Einlassöffnung 204 im oberen Teil des Bechers 203. An einem unteren Ende des Bechers 203 befindet sich eine Milchauslassöffnung 206, durch die Milch aus dem Becher 203 in den Behälter 201 eintreten kann. Der Becher 203 verjüngt sich vom oberen Teil, in dem sich die Einlassöffnung 204 befindet, zum unteren Ende, an dem sich die Milchauslassöffnung 206 befindet.

Die Einlassöffnung 204 ist derart angeordnet, dass das Gemisch aus Milch und Luft von der Melkmaschine in einer tangentialen Richtung, die im wesentlichen senkrecht zu der Symmetrieachse 251 und im wesentlichen parallel zu einer Innenwand des Bechers 203 sein kann, ins Innere des Zentrifugalkopfs 250 eintritt. Dadurch erhält man eine Rotationsbewegung des Gemischs aus Milch und Luft um die Symmetrieachse 251 herum. Bei der Rotationsbewegung wird die Milch an die Innenwand des Bechers 203 gedrückt, während sich die Luft, die eine geringere Dichte als die Milch aufweist, zu der Symmetrieachse 251 hin bewegt.

Die Milch kann durch die Milchauslassöffnung 206 in den Behälter 201 hinein ablaufen, sobald sich ihre Rotationsgeschwindigkeit durch Reibung mit der Innenwand des Bechers 203 soweit verlangsamt hat, dass die Schwerkraft, die die Milch nach unten zieht, die Zentrifugalkraft, die die Milch wegen der konischen Form des Bechers 203 nach oben zieht, überwiegt.

Die Luft kann in eine Öffnung 208 am oberen Ende einer Bypassleitung 207 eintreten, die so angeordnet sein kann, dass die Symmetrieachse 251 durch die Öffnung 208 hindurch verläuft. Durch eine ringförmige Struktur 209, die um die Öffnung 208 herum angeordnet ist, kann zusätzlich verhindert werden, dass Milchtropfen in die Öffnung 208 hinein gelangen. Da somit die Milch dem Behälter 201 zugeführt wird, während die Luft in die Bypassleitung 207 strömt, kann eine Trennung von Milch und Luft bewirkt werden.

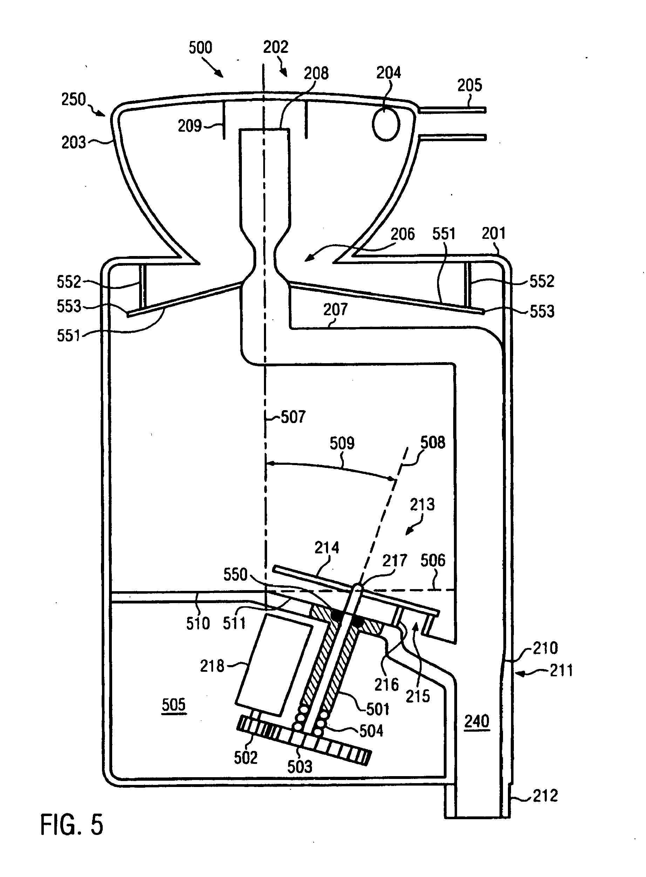

In manchen Ausführungsformen kann unterhalb der Milchauslassöffnung 206 im Behälter 201 eine Verteilerplatte und/oder ein Siebgitter (in Fig. 2 der Übersichtlichkeit halber nicht dargestellt) vorgesehen sein. Merkmale der Verteilerplatte und des Siebgitters werden unten mit Bezug auf Fig. 5 genauer erläutert.

Die Vorrichtung 200 umfasst ferner eine Ableitungseinheit 211, die zum Ableiten von Milch aus dem Behälter 201 ausgebildet ist. Die Ableitungseinheit 211 kann über einen Anschluss 212 mit einer Melkleitung der Melkmaschine verbunden werden, die während des Betriebs der Melkmaschine mit einem Melkvakuum beaufschlagt ist.

Die Ableitungseinheit 211 weist einen Sammelraum 240 auf. Ein unteres Ende 210 der Bypassleitung 207 mündet in den Sammelraum 240. Die Bypassleitung 207 kann dabei in manchen Ausführungsformen im Wesentlichen vertikal durch die Milchauslassöffnung 206 des Zentrifugalkopfs 250 und den Behälter 201 hindurch verlaufen. Im Bereich der Milchauslassöffnung 206 kann sich die Bypassleitung 207 verengen. Dadurch kann eine durch die Bypassleitung 207 verursache Einschränkung des Milchflusses durch die Milchauslassöffnung 206 verringert werden. In anderen Ausführungsformen kann die Bypassleitung 207 auch anders angeordnet sein, was unten mit Bezug auf Fig. 5 genauer erläutert wird.

Die Ableitungseinheit 211 weist ferner eine Öffnung 215 auf, die am Boden des Behälters 201 in das Innere des Behälters 201 mündet. Milch aus dem Inneren des Behälters 201 kann durch die Öffnung 215 hindurch in den Sammelraum 240 eintreten. Dadurch werden in dem Sammelraum 240 die Milch und die Luft, die im Zentrifugalkopf 250 getrennt wurden, wieder zusammengefasst.

Der Sammelraum 240 steht über die Bypassleitung 207, den Innenraum des Zentrifugalkopfs 250 und die Milchauslassöffnung 206 mit dem oberen Teil des Behälters 201 in Verbindung, so dass ein Druckausgleich zwischen dem Sammelraum 240 und dem Behälter 201 stattfinden kann. Wenn der Anschluss 212 mit einer mit dem Melkvakuum beaufschlagten Melkleitung der Melkmaschine verbunden ist, steht somit der obere Teil des Behälters 201 unter einem Druck, der im Wesentlichen gleich dem Melkvakuum ist.

Wenn sich Milch, die durch die Milcheinlassöffnung 206 in den Behälter 201 eintritt, im Inneren des Behälters 201 sammelt, wirkt am Boden des Behälters 201 zusätzlich zu dem Melkvakuum, das im oberen Teil des Behälters 201 oberhalb der Milchoberfläche herrscht, der von der Milch ausgeübte hydrostatische Druck. Der hydrostatische Druck ist umso größer, je höher die Milch im Behälter 201 steht.

Da im Sammelraum 240 das Melkvakuum anliegt, besteht zwischen der Seite der Öffnung 215 im Inneren des Behälters 201 und der Seite der Öffnung 215 im Sammelraum 240 eine Druckdifferenz, die gleich dem hydrostatischen Druck der Milch im Behälter 201 ist, unabhängig davon, wie stark das Melkvakuum ist. Der Druck, der die Milch durch die Öffnung 215 treibt, ist somit von genauen Wert des Melkvakuums im Wesentlichen unabhängig, wodurch Auswirkungen von Schwankungen des Melkvakuums auf den Milchfluss durch die Öffnung 215 vermieden werden können.

Die Ableitungseinheit 211 umfasst Mittel 213 zum Verändern der Größe einer Abflussöffnung, durch die die Milch beim Ableiten aus dem Behälter 201 in den Sammelraum 240 strömt.

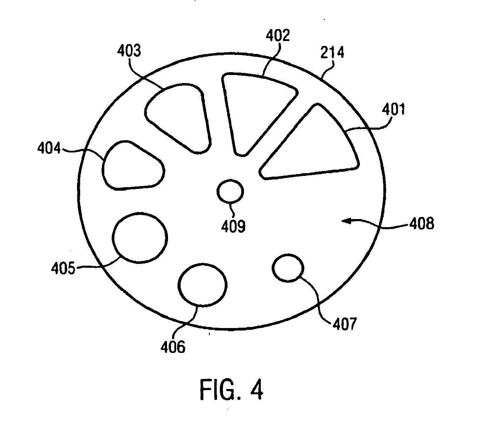

In der in Fig. 2 gezeigten Ausführungsform umfassen die Mittel 213 eine Scheibe 214. Eine Ansicht der Scheibe 214 ist in Fig. 4 gezeigt.

Die Scheibe 214 hat eine kreisförmige Gestalt und weist Öffnungen 401 bis 407 auf, die um den Mittelpunkt der Scheibe 214 herum angeordnet sind. Im Mittelpunkt der Scheibe 214 kann eine Bohrung 409 vorgesehen sein, durch die eine Achse 217, an der die Scheibe 214 befestigt ist und um die die Scheibe 214 gedreht werden kann, geführt werden kann. Die Öffnungen 401 bis 407 haben unterschiedliche Größen, wobei die Größe der Öffnungen 401 bis 407 von der Öffnung 401 bis hin zur Öffnung 407 in einer dem Uhrzeigersinn entgegengesetzten Richtung abnimmt. In anderen Ausführungsformen kann die Größe der Öffnungen 401 bis 417 auch in Richtung des Uhrzeigersinns abnehmen.

Die Öffnungen 401 bis 407 können sich jeweils in einem Sektor der Scheibe 214 befinden. In der in Fig. 4 dargestellten Ausführungsform befindet sich in sieben von acht im Wesentlichen gleich großen Sektoren der Scheibe 214 jeweils eine der Öffnungen 401 bis 407, während im achten Sektor 408 keine Öffnung vorhanden ist. Der achte Sektor 408 bildet einen Bereich der Scheibe, in dem sich keine Öffnung befindet, und der zwischen der kleinsten Öffnung 407 und der größten Öffnung 401 angeordnet ist.

Die Scheibe muss nicht sieben Öffnungen aufweisen. In anderen Ausführungsformen kann auch eine größere oder kleinere Anzahl von Öffnungen vorhanden sein, wobei die Anzahl der Öffnungen größer oder gleich zwei sein kann. In manchen Ausführungsformen können drei oder mehr Öffnungen vorgesehen sein. Die Scheibe 214 muss auch nicht kreisförmig sein. In anderen Ausführungsformen kann sie beispielsweise eine polygonale Form haben.

Die kleineren unter den Öffnungen 401 bis 407, beispielsweise die Öffnungen 405, 406 und 407 können im Wesentlichen kreisförmig sein, während die größeren Öffnungen 401 bis 404 eine längliche, sich zum Mittelpunkt der Scheibe 214 hin verjüngende Form haben können. Dadurch kann innerhalb der Grenzen der Sektoren der Scheibe 214 eine größere Querschnittsfläche der größeren unter den Öffnungen 401 bis 417 bereitgestellt werden, als es bei gleicher Anzahl von Sektoren und gleichem Radius der Scheibe 214 mit kreisförmigen Öffnungen möglich wäre. In anderen Ausführungsformen können jedoch auch alle Öffnungen 401 bis 407 kreisförmig sein, oder eine andere Gestalt haben.

Die Scheibe 214 ist vor der Öffnung 215 angeordnet. Die Unterseite der Scheibe kann dabei einen Rand der Öffnung 215 berühren, wodurch verhindert werden kann, dass Milch durch den Zwischenraum zwischen der Scheibe und dem Rand der Öffnung 215 hindurch aus dem Behälter 201 in den Sammelraum 240 fließt. Die Öffnung 215 kann in manchen Ausführungsformen am Ende eines Vorsprungs 216 am Boden des Behälters 201 angeordnet sein. Dadurch kann im Vergleich zu Ausführungsformen, in denen die Scheibe 214 auf dem Boden des Behälters 201 aufliegt, eine Kontaktfläche zwischen der Scheibe 214 und dem Rand 216 der Öffnung 215 verringert und somit eine Reibung zwischen der Scheibe 214 und dem Rand der Öffnung 215 verringert werden. Außerdem kann eine hygienisch bedenkliche Schmierfilmbildung zwischen der Scheibe 214 und dem Rand 216 der Öffnung 215 weitgehend vermieden oder zumindest verringert werden, da ein relativ großer Teil der der Öffnung 215 zugewandte Seite der Scheibe 214 von Flüssigkeit umspült werden kann, und aufgrund der Drehung der Scheibe 214 Flüssigkeit zwischen der Scheibe 214 und dem Rand 216 der Öffnung 216 ausgetauscht werden kann.

Die Scheibe 214 kann mit Hilfe eines Scheibenantriebs 218 um eine zur Unterseite der Scheibe 214 senkrechte Achse 217 gedreht werden. Die Achse 217 kann neben der Öffnung 215 angebracht sein, wobei ein Abstand zwischen der Achse 217 und dem der Achse 217 gegenüberliegenden Rand der Öffnung 215 kleiner als der Radius der Scheibe 214 sein kann. Dadurch kann durch Drehen der Scheibe 214 eine der Öffnungen 401 bis 407 der Scheibe vor die Öffnung 215 der Ableitungseinheit 211 gebracht werden. Die Öffnung 215 kann derartig geformt sein, dass sie vollständig von einem der Sektoren der Scheibe 214 abgedeckt werden kann, so dass Milch durch genau eine der Öffnungen 401 bis 407, die sich gerade vor der Öffnung 215 befindet, aus dem Behälter 201 in den Sammelraum 240 strömen kann. In manchen Ausführungsformen kann die Öffnung 215 die Gestalt eines Kreissektors haben, dessen Mittelpunkt mit der Position der Achse 217 zusammenfällt und dessen Öffnungswinkel gleich einem Verhältnis zwischen einem Winkel von 360° und der Anzahl der Sektoren der Scheibe 214 sein kann.

Diejenige der Öffnungen 401 bis 407 der Scheibe, die sich gerade vor der Öffnung 215 der Ableitungseinheit 211 befindet, bildet eine Abflussöffnung, durch die Milch aus dem Behälter 201 strömen kann. Die Größe der Abflussöffnung kann variiert werden, indem die Scheibe 214 gedreht und eine andere der Öffnungen 401 bis 407 vor die Öffnung 215 der Ableitungseinheit 211 positioniert wird. Der Abfluss von Milch aus dem Behälter 201 kann gestoppt werden, indem der Sektor 408 ohne Öffnung vor der Öffnung 215 der Ableitungseinheit 211 positioniert wird, so dass diese von der Scheibe 214 im Wesentlichen vollständig abgedeckt wird.

Der Scheibenantrieb 218 kann in manchen Ausführungsformen einen Schrittmotor umfassen, wobei in manchen Ausführungsformen ein Getriebe zum Bereitstellen einer Untersetzung zwischen der Drehzahl des Schrittmotors und der Drehzahl der Scheibe 214 vorgesehen sein kann. Der Scheibenantrieb 218 kann derart ausgebildet sein, dass ein zum Positionieren von einer zu der momentan vor der Öffnung 215 angeordneten Öffnung der Scheibe 214 benachbarten Öffnung vor der Öffnung 215 benötigter Zeitraum im Bereich von ungefähr 0,1 Sekunden bis ungefähr 0,3 Sekunden liegt. Aufgrund der relativ guten Schmiereigenschaften von Milch und der relativ geringen Druckkraft auf die Scheibe 214, die maximal gleich dem hydrostatischen Druck auf einem Sektor der Scheibe 214 sein kann, sowie dem relativ geringen Trägheitsmoment der Scheibe 214, die in manchen Ausführungsformen aus rostfreiem Stahl bestehen, einen Durchmesser von ungefähr 60 mm und eine Ducke von ungefähr 0,6 mm haben kann, kann dies auch mit relativ schwachen und leichten Schrittmotoren erreicht werden.

Aufgrund der Druckdifferenz zwischen der Milch am Boden des Behälters 201 und dem Sammelraum 240, die, wie oben ausgeführt, im Wesentlichen gleich dem hydrostatischen Druck der Milch im Behälter 201 ist, strömt die Milch durch die Abflussöffnung. Da der hydrostatische Druck steigt, wenn der Füllstand der Milch im Behälter 201 zunimmt, vergrößert sich der Milchfluss durch die Abflussöffnung mit zunehmendem Füllstand. Der Milchfluss durch die Abflussöffnung hängt außerdem von der Größe der Abflussöffnung ab, wobei der Milchfluss bei gleichem Füllstand umso größer ist, je größer die Abflussöffnung ist.

Der Milchfluss durch die Abflussöffnung kann für jede der mit Hilfe der Mittel 213 zum Verändern der Größe der Abflussöffnung einstellbare Größe als Funktion des Füllstands bestimmt werden.

In manchen Ausführungsformen kann der Füllstand des Behälters 201 in der Einheit "Milchmasse pro Flächeneinheit" gemessen werden. Wenn die Milch frei von Luftblasen wäre, könnte aus dem in dieser Einheit angegebenen Füllstand durch Division durch die Dichte der Milch die Füllhöhe der Milch im Behälter 201 berechnet werden. Die Milch im Behälter 201 kann jedoch eine gewisse Menge an Luftblasen enthalten, die im Wesentlichen keinen Beitrag zur Milchmasse leisten, da die Dichte der Luft sehr viel geringer als die Dichte der Milch ist. Im oberen Teil des Behälters 201 können sehr viele Luftblasen vorhanden sein, so dass die Milch eine schaumige Konsistenz hat. Im unteren Teil des Behälters können wenige Luftblasen vorhanden sein, da die Luftblasen im Behälter 201 aufgrund ihrer geringeren Dichte nach oben aufsteigen. Durch die Abflussöffnung kann somit Milch mit einem sehr geringen Anteil von Luftblasen strömen. Der Milchfluss durch die Abflussöffnung hängt vom Druckunterschied zwischen der Milch am Boden des Behälters 201 und dem Sammelraum 240 ab, der wiederum von der Gewichtskraft der auf dem Boden des Behälters lastenden Flüssigkeitssäule bestimmt wird. Aufgrund des vernachlässigbaren Gewichts der Luftblasen kann ihr Beitrag zu dem Druckunterschied vernachlässigt werden. Der Druckunterschied ist deshalb im Wesentlichen von der Milchmasse pro Flächeneinheit, die auf der Abflussöffnung lastet, abhängig, während die Füllhöhe zusätzlich von der Anzahl und Größe der Luftblasen, sowie von der Dichte der Milch, die bei verschiedenen Tierarten unterschiedlich sein kann, abhängen kann.

Somit kann der Milchfluss durch die Abflussöffnung genauer bestimmt werden, wenn er als Funktion des in Milchmasse pro Flächeneinheit gemessenen Füllstandes bestimmt wird.

Der Fluss durch die Abflussöffnung kann, zumindest näherungsweise, proportional zur Wurzel aus dem Füllstands s der Milch im Behälter 201 sein. Die Proportionalitätskonstante kann experimentell bestimmt werden, indem man bei vorgegebenem Füllstand während eines bestimmten Zeitraums die Milch durch die Abflussöffnung ausströmen lässt und die Menge der ausgeströmten Milch misst. Der Zeitraum kann so festgelegt werden, dass die ausströmende Milchmenge klein gegenüber der Milchmenge im Behälter 201 ist, so dass der Füllstand durch das Ausströmen nur geringfügig verändert wird. Die Proportionalitätskonstante ergibt sich dann durch Division der gemessenen Milchmenge durch ein Produkt aus der Dauer des Zeitraums und der Wurzel des vorgegebenen Füllstands.

In anderen Ausführungsformen kann die Proportionalitätskonstante bestimmt werden, indem die während eines bestimmten Zeitraums ausströmende Milchmenge bei verschiedenen Füllständen gemessen wird und an die gemessenen Daten eine Funktion der Form

$$M(s) = \Delta t \cdot a \cdot \sqrt{s} \qquad (1)$$

gefittet wird. Dabei ist M(s) die während des Zeitraums $\Delta t$ bei dem Füllstands s ausströmende Milchmenge und a die gesuchte Proportionalitätskonstante.

Bei bekannter Proportionalitätskonstante a kann dann der Milchfluss F durch die Abflussöffnung aus dem Füllstand s gemäß der Formel

$$F = a \cdot \sqrt{s} \qquad (2)$$

berechnet werden.

Der Milchfluss kann dabei in der Einheit "Milchmasse pro Zeiteinheit" gemessen werden.

In anderen Ausführungsformen kann eine andere Funktion an die gemessenen Daten gefittet werden. In weiteren Ausführungsformen kann der Milchfluss durch die Öffnung als Funktion des Füllstands durch theoretische Berechnungen bestimmt werden.

Für jede der Öffnungen 401 bis 407 der Scheibe 214 ergibt sich aufgrund der unterschiedlichen Größe der Öffnungen 401 bis 407 eine andere Proportionalitätskonstante a.

Die Vorrichtung 200 umfasst ferner eine Füllstandsmessvorrichtung 219. Die Füllstandsmessvorrichtung 219 kann ein Staurohr 220 umfassen. Das Staurohr 220 weist ein offenes unteres Ende 221 auf, das sich im Inneren des Behälters 201 unterhalb einer Füllhöhe, die bei einem minimalen zu messenden Füllstands des Behälters 201, auftritt und die in Fig. 2 durch eine gestrichelte Linie 222 dargestellt ist, befindet, so dass sich das untere Ende 221 des Staurohrs 220 unterhalb der Milchoberfläche befindet, wenn der Behälter höher als bis zum minimalen Füllstand gefüllt ist. Am oberen Ende des Staurohrs 220 befindet sich eine Gaszufuhr 224, die eine Drosselblende umfasst, die das Staurohr 220 am oberen Ende abschließt. Das obere Ende 224 des Staurohrs 220 befindet sich in der Umgebung der Vorrichtung, so dass aufgrund des Melkvakuums Luft aus der Umgebung durch die Drosselblende in das Staurohr 220 gesaugt wird. Die Drosselblende kann derart dimensioniert sein, dass bei einem Druckunterschied zwischen der Umgebung und dem Inneren des Staurohrs von 50 kpa, was einem typischen Wert für das Melkvakuum entspricht, ungefähr ein Liter Luft pro Minute in das Staurohr 220 strömt.

In anderen Ausführungsformen der Erfindung kann mit Hilfe einer Pumpe oder einer Druckflasche Luft oder ein anderes Gas in das Staurohr 220 geleitet werden.

Die Luft, die durch die Drosselöffnung 224 in das Staurohr 220 eintritt, tritt am unteren Ende des Staurohrs 221 aus diesem aus. In manchen Ausführungsformen kann am unteren Ende 221 des Staurohrs 220 eine Kerbe 226 vorgesehen sein, durch die eine Bildung großer Blasen unterdrückt werden kann, wodurch ein gleichmäßiges Ausströmen der Luft aus dem Staurohr 220 erzielt wird.

Während des Ausströmens der Luft aus dem Staurohr 220 stellt sich in dessen Innerem ein Druck ein, der im Wesentlichen gleich dem Druck der Milch am unteren Ende des Staurohrs 220 ist. Letzterer ist gleich einer Summe des von der Milch ausgeübten hydrostatischen Drucks und des im oberen Bereich des Behälters 201, oberhalb der Milchoberfläche, herrschenden Drucks.

Die Füllstandsmessvorrichtung 219 umfasst ferner eine Druckmessvorrichtung 225, die dafür ausgebildet ist, einen Druckunterschied zwischen dem Inneren des Staurohrs 220 und einem Bereich des Behälters 201 oberhalb eines maximalen Füllstands, der beim regulären Betrieb der Vorrichtung 200 nicht überschritten wird, zu messen. In Fig. 2 wird durch eine gestrichelte Linie 223 eine Füllhöhe der Milch in dem Behälter, die sich bei einem typischen Anteil von Luftblasen in der Milch bei dem maximalen Füllstand des Behälters 201 ergibt, angedeutet. Der Druckunterschied ist gleich dem hydrostatischen Druck der Milch am unteren Ende des Staurohrs 220.

Wenn die Milch im Behälter 201 Luftblasen enthält, kann der Beitrag der Luftblasen zum hydrostatischen Druck der Milch vernachlässigt werden, da die Dichte der Luft sehr viel geringer als die Dichte der sie umgebenden Milch ist. Der hydrostatische Druck hängt somit im Wesentlichen von der Masse der Milch pro Flächeneinheit ab. Aus dem Druckunterschied zwischen dem Inneren des Staurohrs 220 und dem Bereich des Behälters 201 oberhalb des maximalen Füllstands kann somit der Füllstand des Behälters in der Einheit "Milchmasse pro Flächeneinheit" berechnet werden, beispielsweise durch Division des gemessenen Druckunterschieds durch die Gravitationsbeschleunigung an der Erdoberfläche. In manchen Ausführungsformen kann zusätzlich ein Korrekturfaktor addiert werden, durch den der Abstand des unteren Endes 221 des Staurohrs 220 vom Boden des Behälters 201 berücksichtigt wird.

Die Druckmessvorrichtung 225 kann eine Differenzdrucksonde 227 umfassen, die dafür ausgelegt ist, einen Druckunterschied zwischen einem ersten Abschnitt der Druckmesssonde 227, der mit einem oberen Teil eines Messvolumens 253 in Verbindung steht und einem zweiten Abschnitt der Druckmesssonde 253, der mit einem unteren Teil des Messvolumens 253 in Verbindung steht, zu messen. Der obere Teil des Messvolumens 253 ist durch eine erste Leitung 228 mit dem Inneren des Staurohrs 220 verbunden und der untere Teil des Messvolumens 253 ist durch eine zweite Leitung 231 mit einem Bereich des Behälters 201 oberhalb der beim maximalen Füllstand auftretenden Füllhöhe 223 verbunden. Dadurch stellt sich im oberen Teil des Messvolumens 253 ein Druck ein, der im Wesentlichen gleich dem Druck im Inneren des Staurohrs 220 ist und im unteren Teil des Messvolumens 253 stellt sich ein Druck ein, der im Wesentlichen gleich dem Druck im oberen Teil des Behälters 201 ist. Dadurch kann mit Hilfe der Differenzdrucksonde 217 ein Druckunterschied zwischen dem Inneren des Staurohrs 220 und dem Bereich des Behälters 201 oberhalb des maximalen Füllstands 223 gemessen werden.

Bei der Messung des Druckunterschieds mit Hilfe der Druckmesssonde 227 ist kein Kontakt zwischen der Druckmesssonde 227 und der Milch erforderlich, wodurch eine Verkalkung und/oder Verkäsung der Druckmesssonde 227 vermieden werden kann. Außerdem kann die Druckmesssonde 227 im Inneren des Messvolumens 227 geschützt untergebracht werden, so dass sie vor Beschädigungen, z.B. bei der Reinigung der Vorrichtung 200, geschützt ist.

In manchen Ausführungsformen kann an einem Ende der ersten Leitung 228 im Inneren des Staurohrs 220 eine Tropfnase 230 vorgesehen sein. Alternativ oder zusätzlich kann am Ende der zweiten Leitung 229 im inneren des Behälters 201 eine Tropfnase 231 vorgesehen sein. Dadurch kann verhindert werden, dass Milch oder eine andere Flüssigkeit aus dem Behälter 201 in die Leitungen 228, 229 eindringt, beispielsweise wenn das Melkvakuum bei voll gefülltem Behälter 201 unterbrochen wird, oder die noch nasse Vorrichtung 201 beim Transport nicht senkrecht, beispielsweise auf dem Kopf stehend, gehalten wird.

Würde Flüssigkeit in die Leitungen 228, 229 eindringen, könnte es zu Schwingungen der Flüssigkeit gegen die kompressible Luft zwischen der Flüssigkeit und der Druckmesssonde 217 kommen, bei denen die Luft abwechselnd komprimiert und expandiert wird. Dadurch könnten störende Schwankungen des gemessenen Druckunterschieds entstehen. Außerdem könnte es beim Eindringen von Flüssigkeit in die Leitungen 228, 229 zu einer Beschädigung der Druckmesssonde 227 kommen.

In manchen Ausführungsformen kann die Druckmesssonde 217 außerdem durch Membranen 232, 233 aus einem gasdurchlässigen und flüssigkeitsundurchlässigen Material wie z.B. Gore-Tex, Teflon oder einem Sintermaterial vor Feuchtigkeit geschützt werden. Dabei kann ein Raum zwischen den Membranen 232, 233 und der Druckmesssonde 227 klein gehalten werden (z.B. ein Volumen von ungefähr 0,02 bis 0.1 ml haben), um den zum Druckausgleich zwischen beiden Seiten der Membranen 232, 233 erforderlichen Gasaustausch gering zu halten.

In manchen Ausführungsformen kann die Druckmesssonde 227 durch eine extrem kriechende Schutzflüssigkeit wie z.B. Parylen gegen Feuchtigkeitsschäden behandelt werden.

Die Füllstandsmessvorrichtung 219 kann in manchen Ausführungsformen eine Heizvorrichtung 234 umfassen, die dafür ausgelegt ist, die Differenzdrucksonde 227 und wahlweise das gesamte Messvolumen 253 zu beheizen. Die Heizvorrichtung 234 kann beispielsweise einen elektrischen Heizwiderstand umfassen. Durch Beheizung der Differenzdrucksonde 227 und/oder des Messvolumens 253 kann eine Kondenswasserbildung auf der Differenzdrucksonde 227 und/oder im Messvolumen 253 vermieden oder zumindest verringert werden.

In manchen dieser Ausführungsformen kann das Messvolumen 253 von einer Wärmeisolierung umgeben sein, wobei die Heizvorrichtung innerhalb der Wärmeisolierung vorgesehen ist. Dadurch kann der zum Beheizen des Messvolumens und/oder der Differenzdrucksonde 227 erforderliche Energiebedarf verringert werden, was einen energiesparenderen Betrieb der Vorrichtung 200 ermöglicht.

Die vorliegende Erfindung ist nicht auf Ausführungsformen beschränkt, in denen die Füllstandsmessvorrichtung 219 wie oben beschrieben aufgebaut ist.

In anderen Ausführungsformen können zwei Absolutdruck-Messsonden vorgesehen sein, von denen sich eine unterhalb der dem minimalen Füllstand entsprechenden Füllhöhe 222 und die andere oberhalb der dem maximalen Füllstand entsprechenden Füllhöhe 223 befindet. Der hydrostatische Druck der Milch, und damit der Füllstand kann durch rechnerische Differenzbildung der von beiden Absolutdruck-Messsonden gemessenen Drücke bestimmt werden.

In weiteren Ausführungsformen kann eine Differenzdruckmesssonde vorgesehen sein, deren eine Seite am Boden des Behälters 201 angeordnet ist, und deren andere Seite durch eine Leitungsverbindung mit einem Bereich des Behälters 201 oberhalb des maximalen Füllstands 223 verbunden ist. Dadurch können Probleme der rechnerischen Differenzbildung zwischen zwei Absolutdruck-Messsonden, die von Unterschieden der beiden Absolutdruck-Messsonden, z.B. hinsichtlich der Linearität, des Offsets und des Temperaturgangs herrühren, vermieden werden.

In manchen dieser Ausführungsformen kann zwischen der Differenzdrucksonde und dem Innenraum des Behälters 201 eine elastische Trennmembran vorgesehen ist, wobei ein Zwischenraum zwischen der elastischen Trennmembran und der Differenzdrucksonde mit einem Öl, z.B. einem Silikonöl, gefüllt sein kann. Dadurch kann ein direkter Kontakt zwischen der Milch und der Differenzdrucksonde, der zu einer Verkalkung und/oder Verkäsung der Differenzdrucksonde und zu einem Risiko mechanischer Beschädigungen der Differenzdrucksonde führen könnte, vermieden werden.

In anderen Ausführungsformen kann der Füllstand des Behälters 201 mit Hilfe mehrerer in unterschiedlichen Abständen vom Boden des Behälters 201 angeordneter Einzel-Elektroden gemessen werden, die beispielsweise an einer Seitenwand des Behälters 201 angeordnet sein können. Diese höhengestaffelten Einzel-Elektroden (Messpunkte) können mit einer gemeinsamen Gegenelektrode zusammenwirken, die sich im Behälter vertikal vom Boden bis zur einer Füllhöhe, die bei einem maximalen Füllstand des Behälters 201 auftreten kann, in einem im Wesentlichen konstanten Abstand von den Einzel-Elektroden erstreckt. Aufgrund der elektrischen Leitfähigkeit der Milch verringert sich der elektrische Widerstand zwischen einer Einzelelektrode und der Gegenelektrode, wenn sich die Einzel-Elektrode unterhalb der Milchoberfläche befindet. Durch Vergleich von Widerständen, die jeweils zwischen der Gegenelektrode und den Einzel-Elektroden gemessen werden, mit einem Schwellwert kann somit bestimmt werden, welche Einzel-Elektroden sich unterhalb der Milchoberfläche befinden. Bei bekannter Anordnung der Einzel-Elektroden kann daraus auf die Füllhöhe der Milch in dem Behälter 201 geschlossen werden.

Da die Leitfähigkeit der Milch abnimmt, wenn sich in der Milch Luftblasen befinden, kann aus den gemessenen elektrischen Widerständen außerdem der jeweilige Luftanteil der Milch zwischen der Gegenelektrode und den Einzel-Elektroden und aus diesem die Dichte der Milch bestimmt werden. Die Widerstände können dabei auf einen am Boden des Behälters 201 gemessenen Wert normiert werden, um Unterschiede in der Leitfähigkeit der reinen Milch zu kompensieren. Führt man eine derartige Messung für alle Einzel-Elektroden durch, kann bei bekannter Dichte reiner Milch ein Dichteprofil der Milch über den ganzen Höhenverlauf im Behälter 201 bestimmt werden. Durch Integration des Dichteprofils über die Höhe des Behälters, wobei oberhalb der Füllhöhe eine Dichte von Null vorhanden ist, erhält man den Füllstand in der Einheit "Milchmasse pro Flächeneinheit".

In weiteren Ausführungsformen kann der Füllstand mit Hilfe kapazitiver, konduktiver oder induktiver Messverfahren, oder auch über Schwimmer oder Auftriebskörper oder mit Ultraschall bestimmt werden.

Die Vorrichtung 200 umfasst ferner eine Steuereinheit 236, die dafür ausgebildet ist, die Mittel 213 zum Verändern der Größe der Abflussöffnung in Abhängigkeit von dem von der Füllstandmessvorrichtung 219 bestimmten Füllstand der Milch in dem Behälter 201 zu steuern, um die Größe der Abflussöffnung derart einzustellen, dass der Füllstand in einem vorgegebenen Bereich, beispielsweise zwischen dem minimalen Füllstand und dem maximalen Füllstand, bleibt.

Die Steuereinheit 236 kann durch ein Elektronikmodul 235 bereitgestellt werden, das durch eine Batterie 238, beispielsweise einen Akkumulator, mit Energie versorgt wird. Das Elektronikmodul 235 kann mit der Füllstandmessvorrichtung 219 verbunden sein. In Ausführungsformen, in denen die Füllstandsmessvorrichtung 219 wie oben mit Bezug auf Fig. 2 beschrieben aufgebaut ist, kann das Elektronikmodul 235 insbesondere mit der Differenzdrucksonde 227 und der Heizvorrichtung 234 verbunden sein, und dafür ausgelegt sein, aus dem von der Differenzdrucksonde 227 gemessenen Druckunterschied den Füllstand zu berechen sowie bei Bedarf die Heizvorrichtung 234 zu betreiben.

Das Elektronikmodul 235 kann ferner mit den Mitteln 213 zum Verändern der Größe der Abflussöffnung verbunden sein. In Ausführungsformen, in denen die Mittel 213 wie oben mit Bezug auf Fig. 2 und 4 beschrieben aufgebaut sind, kann das Elektronikmodul insbesondere mit dem Scheibenantrieb 218 verbunden sein und dafür ausgelegt sein, diesen zum Bewegen der Scheibe 214 zu steuern.

In manchen Ausführungsformen kann die Steuereinheit 236 dafür ausgelegt sein, die Mittel 213 zum Verändern der Größe der Abflussöffnung derart zu steuern, dass die Abflussöffnung vergrößert wird, wenn der Füllstand des Behälters einen vorgegebenen oberen Schwellwert überschreitet und die Abflussöffnung verkleinert wird, wenn der Füllstand des Behälters einen vorgegebenen unteren Schwellwert unterschreitet.

In Ausführungsformen, in denen die Mittel 213 wie oben mit Bezug auf Fig. 2 beschrieben aufgebaut sind, kann die Abflussöffnung vergrößert werden, indem die Scheibe 214 derart gedreht wird, dass eine andere der Öffnungen 401 bis 407, die größer als die momentan vor der Öffnung 215 der Ableitungseinheit 211 angeordnete Öffnung ist, vor der Öffnung 215 positioniert wird. Die Abflussöffnung kann verkleinert werden, indem eine kleinere der Öffnungen 401 bis 407 vor der Öffnung 215 der Ableitungseinheit 211 positioniert wird.

Wenn die Abflussöffnung vergrößert wird, vergrößert sich der Milchfluss aus dem Behälter 201. Dadurch kann sich der Füllstand des Behälters 201 verringern, so dass der Füllstand wieder unter den oberen Schwellwert fällt. Bei sehr großen Milchflüssen in den Behälter 201 kann es vorkommen, dass der Füllstand des Behälter nach der Vergrößerung der Abflussöffnung lediglich langsamer ansteigt als zuvor oder konstant bleibt. In diesem Fall kann die Steuereinheit 236 den Milchfluss durch eine weitere Vergrößerung der Abflussöffnung weiter steigern. Dies kann beispielsweise geschehen, wenn der Milchfluss während eines festgelegten Zeitintervalls nach der letzten Vergrößerung der Abflussöffnung nicht unter den oberen Schwellwert fällt. Die Größe der Abflussöffnung kann solange weiter vergrößert werden, bis der Füllstand unter den oberen Schwellwert fällt.

Wenn die Abflussöffnung verkleinert wird, verringert sich der Milchfluss aus dem Behälter 201. Dadurch kann der Füllstand wieder über den unteren Schwellwert steigen. Sollte der Milchfluss innerhalb eines festgelegten Zeitintervalls nicht über den unteren Schwellwert steigen, was bei sehr kleinen Milchflüssen vorkommen kann, kann die Abflussöffnung weiter verkleinert werden, solange bis der untere Schwellwert wieder überschritten wird. In manchen Ausführungsformen kann die Abflussöffnung bei einer längeren Unterschreitung des unteren Schwellwerts auch ganz geschlossen werden, beispielsweise durch Positionieren des Sektors 408 ohne Öffnung der Scheibe 214 vor der Öffnung 215 der Ableitungseinheit 211.

In manchen Ausführungsformen kann der obere Schwellwert gleich dem maximalen Füllstand 223 sein und der untere Schwellwert kann gleich dem minimalen Füllstand 222 sein. In anderen Ausführungsformen kann der obere Schwellwert kleiner als der maximale Füllstand 223 sein und der untere Schwellwert kann größer als der minimale Füllstand sein. Beispielsweise kann der obere Schwellwert ungefähr 90% des maximalen Füllstands betragen und der untere Schwellwert kann ungefähr 110% des minimalen Schwellwerts betragen. Dadurch kann ein auch nur geringfügiges Überschreiten des maximalen Füllstands und ein Unterschreiten des minimalen Füllstands vermieden werden.

In manchen Ausführungsformen kann der minimale Füllstand als derjenige Füllstand definiert sein, bei dem die Milch im Behälter bei einem minimalen im Betrieb der Vorrichtung 200 auftretenden Anteil von Luftblasen in der Milch, beispielsweise bei im Wesentlichen blasenfreier Milch, bis zum unteren Endes des Staurohrs 220 steht. In solchen Ausführungsformen kann ein Unterschreiten des minimalen Füllstands Messungen des Füllstands mit Hilfe der Füllstandsmessvorrichtung 219 verhindern, da in diesem Fall das untere Ende des Staurohrs über der Milchoberfläche liegen kann, so dass kein Druckausgleich mehr zwischen dem hydrostatischen Druck der Milch und dem Gasdruck im Inneren des Staurohrs 220 mehr möglich ist. Der maximale Füllstand kann in manchen Ausführungsformen als derjenige Füllstand definiert sein, bei dem die Milch bei einem maximalen im Betrieb der Vorrichtung 200 auftretenden Anteil von Luftblasen in der Milch, der experimentell bestimmt werden kann, bis zur Öffnung der Leitung 231 steht. In solchen Ausführungsformen kann ein Überschreiten des maximalen Füllstands zu einem Eindringen von Milch in die Leitung 231 und zu einer Verschmutzung der Differenzdruckmesssonde 227 führen.

Eine Vergrößerung der Ausflussöffnung beim Überschreiten eines oberen Schwellwerts, der kleiner als die maximale Füllstand ist, kann somit dabei helfen, Verschmutzungen der Differenzdrucksonde 227 durch Milch zu vermeiden, und eine Verkleinerung der Ausflussöffnung beim Unterscheiten eines unteren Schwellwerts, der größer als der minimale Füllstand ist, kann dabei helfen, eine fortlaufende Messbarkeit des Füllstands mit Hilfe der Füllstandsmessvorrichtung 219 sicherzustellen.

Wie oben ausgeführt, hängt der Milchfluss durch die Abflussöffnung des Behälters 201 von der Größe der Abflussöffnung und dem Füllstand des Behälters 201 ab, wobei bei höherem Füllstand ein größerer Milchfluss erhalten werden kann. Wenn sich der Milchfluss aus der Zuleitungseinheit 202 in den Behälter 201 in einem Bereich zwischen dem Milchfluss, der sich bei der eingestellten Größe der Abflussöffnung bei dem minimalen Füllstand 222 ergibt und dem Milchfluss, der sich bei der eingestellten Größe der Abflussöffnung bei dem maximalen Füllstand 223 ergibt, befindet, kann sich deshalb ein Gleichgewicht einstellen, bei dem der Füllstand einen Wert zwischen dem minimalen Füllstand 222 und dem maximalen Füllstand 223 annimmt. Bei diesem Wert sind der Zufluss in den Behälter 201 und der Abfluss aus dem Behälter 202 im Wesentlichen gleich. Durch Verändern der Größe der Abflussöffnung kann der Bereich, innerhalb dessen sich ein Gleichgewichtszustand einstellen kann, variiert werden.

Durch die von der Steuereinheit 236 vorgenommene Veränderung der Größe der Abflussöffnung kann die Größe der Abflussöffnung solange variiert werden, bis die Abflussöffnung eine derartige Größe hat, dass sich ein Gleichgewichtszustand zwischen Zu- und Abfluss einstellen kann oder nur noch relativ langsame Veränderungen des Füllstands des Behälters 201 auftreten. Dadurch können häufige Veränderungen der Größe der Abflussöffnung vermieden oder zumindest reduziert werden.

In manchen Ausführungsformen kann am Beginn des Melkvorgangs die Abflussöffnung geschlossen sein. Der Milchfluss in den Behälter 201 führt dann zu einem Anstieg des Füllstands des Behälters 201, aus dem der Milchfluss in den Behälter 201 berechnet werden kann, was unten genauer erläutert wird.

Wird während des Melkvorgangs der obere Schwellwert des Füllstands überschritten, kann aus dem berechneten Milchfluss eine Größe der Abflussöffnung bestimmt werden, bei der sich bei dem berechneten Milchfluss ein Gleichgewichtszustand zwischen dem Milchfluss in den Behälter 201 und dem Milchfluss aus dem Behälter 201 heraus einstellen kann, wobei der Füllstand im Gleichgewichtszustand zwischen dem unteren und dem oberen Schwellwert liegt. Anschließend kann mit Hilfe der Mittel 213 die bestimmte Größe der Abflussöffnung eingestellt werden.

Wenn zu einem späteren Zeitpunkt der Milchfluss in den Behälter 201 ansteigt, kann es vorkommen, dass der obere Schwellwert erneut überschritten wird. Nimmt der Milchfluss in den Behälter 201 dagegen ab, kann es vorkommen, dass der untere Schwellwert unterschritten wird.

In beiden Fällen kann aus dem momentanen Milchfluss, der wie unten ausgeführt, aus dem Füllstand und der momentanen Größe der Abflussöffnung berechnet werden kann, eine Größe der Abflussöffnung bestimmt werden, bei der sich bei dem momentanen Milchfluss ein Gleichgewichtszustand zwischen dem Milchfluss in den Behälter 201 und dem Milchfluss aus dem Behälter 201 heraus einstellen kann, wobei der Füllstand im Gleichgewichtszustand zwischen dem unteren und dem oberen Schwellwert liegt. Anschließend kann mit Hilfe der Mittel 213 die bestimmte Größe der Abflussöffnung eingestellt werden.

In Ausführungsformen, in denen die Größe der Abflussöffnung wie oben erläutert mit Hilfe einer Scheibe 214 mit mehreren Öffnungen 401 bis 407 variiert wird, kann für jede der Öffnungen 401 bis 407 ein Gleichgewichtsintervall von Milchflüssen bestimmt werden, bei dem sich ein Gleichgewichtszustand mit einem Füllstand zwischen dem unteren und dem oberen Schwellwert einstellen kann. Eine obere Grenze des Intervalls entspricht dabei einem Milchfluss durch die Ausflussöffnung bei einem Füllstand, der gleich dem oberen Schwellwert ist. Eine untere Grenze des Intervalls entsprich einem Milchfluss durch die Ausflussöffnung bei einem Füllstand, der gleich dem unteren Schwellwert ist.

In manchen Ausführungsformen können die Gleichgewichtsintervalle für einige oder alle der Öffnungen 401 bis 407 Teilbereiche eines Milchflußbereichs von ungefähr 0,5 kg/min bis ungefähr 12 kg/min sein.

Um eine Größe der Abflussöffnung zu bestimmen, bei der sich beim momentanen Milchfluss ein Gleichgewichtszustand einstellen kann, kann eine der verfügbaren Größen der Abflussöffnung ausgewählt werden, bei der der momentane Milchfluss in dem Gleichgewichtsintervall liegt.

Wenn der momentane Milchfluss bei keiner der verfügbaren Größen der Abflussöffnung in dem Gleichgewichtsintervall liegt, kann bei einer Überschreitung des oberen Schwellwerts die im Vergleich zur momentan vor der Öffnung 215 der Ableitungseinheit 211 angeordneten Öffnung der Scheibe 214 nächstgrößere der Öffnungen 401 bis 407 vor der Öffnung 215 positioniert werden. Wird danach innerhalb eines vorgegebenen Zeitintervalls der obere Schwellwert nicht unterschritten, kann nochmals auf die nächstgrößere Öffnung umgeschaltet werden.

Wird der untere Schwellwert unterschritten und ist keine Größe der Abflussöffnung verfügbar, bei der sich ein Gleichgewichtszustand einstellen kann, kann die im Vergleich zur momentan vor der Öffnung 215 der Ableitungseinheit 211 angeordneten Öffnung der Scheibe 214 nächstkleinere der Öffnungen 401 bis 407 vor der Öffnung 215 positioniert werden. Wird danach innerhalb eines vorgegebenen Zeitintervalls der untere Schwellwert nicht überschritten, kann nochmals auf die nächstgrößere Öffnung umgeschaltet werden.

Die vorliegende Erfindung ist nicht auf Ausführungsformen beschränkt, in denen die einzustellende Größe der Abflussöffnung auf Grundlage des momentanen Milchflusses bestimmt wird. In anderen Ausführungsformen kann aufgrund von Messungen des Milchflusses zu verschiedenen Zeitpunkten eine Extrapolation des Milchflusses durchgeführt werden.

Beispielsweise kann in manchen Ausführungsformen auf Grundlage von einem Wert des momentanen Milchflusses und einem Wert der Milchflusses, der an einem Zeitpunkt, der um eine vorgegebene Zeitdauer in der Vergangenheit liegt, gemessen wurde, eine lineare Extrapolation des Milchflusses durchgeführt werden. Zu diesem Zweck kann eine lineare Funktion für die Zeitabhängigkeit des Milchflusses, die durch die gemessenen Werte verläuft, bestimmt werden. In anderen Ausführungsformen kann die Extrapolation auch auf der Grundlage von mehr als zwei Messwerten durchgeführt werden, beispielsweise indem eine lineare Funktion an die gemessenen Werte gefittet wird, und es kann auch eine nichtlineare Extrapolation durchgeführt werden, beispielsweise indem eine quadratische Funktion an die Messwerte angefittet wird. Bei der Extrapolation wird auf Grundlage des in der Gegenwart gemessenen Milchflusses und der in der Vergangenheit gemessenen Milchflüsse für einen in der Zukunft liegenden Zeitpunkt ein Milchfluss abgeschätzt, indem der in der Zukunft liegende Zeitpunkt in die an die gemessenen Werte angepasste Funktion eingesetzt wird.

Die Bestimmung der Größe der Ausflussöffnung, bei der sich ein Gleichgewichtszustand einstellen kann, kann dann wie oben beschrieben durchgeführt werden, wobei anstelle des momentanen Milchflusses der extrapolierte Wert für den Milchfluss verwendet wird. Dadurch können kurzfristige Veränderungen des Milchflusses besser berücksichtigt werden.

In manchen Ausführungsformen können die Mittel 213 zum Verändern der Größe der Abflussöffnung derart ausgebildet sein, dass ein Satz von Größen der Abflussöffnung eingestellt werden kann, der eine Verringerung der Anzahl der Größenveränderungen der Abflussöffnung ermöglicht. In der oben mit Bezug auf Fig. 2 beschriebenen Ausführungsform kann dies durch geeignete Wahl der Größen der Öffnungen 401 bis 407 geschehen, was im Folgenden genauer erläutert wird.

Die Größen der Öffnungen 401 bis 407 können derart gewählt sein, dass sich die Durchflussraten der Milch durch die Öffnungen bei einem vorgegebenen Füllstand, beispielsweise bei einem mittleren Füllstand zwischen dem minimalen Füllstand 222 und dem maximalen Füllstand, um eine vorgegebene Durchflussratendifferenz unterscheiden.

Beispielsweise können die Größen der Öffnungen 401 bis 407 derart gewählt sein, dass sich bei einem Füllstand des Behälters 201 von 0,01 kg/cm$^2$, entsprechend einer Füllhöhe von ungefähr 100 mm, Durchflussraten von 10,5 kg/min, 9,0 kg/min, 7,5 kg/min, 6,0 kg/min, 4,5 kg/min, 3,0 kg/min und 1,5 kg/min ergeben. Durch Positionieren des Sektors 408 ohne Öffnung vor der Öffnung 215 der Ableitungseinheit 211 kann außerdem ein Durchfluss von Null eingestellt werden, der sich von dem Durchfluss bei der kleinsten Öffnung 407 um 1,5 kg/min unterscheidet. Die Durchflussraten benachbarter Sektoren der Scheibe 214 einschließlich des Sektors 408 ohne Öffnung, die bei dem vorgegebenen Füllstand von 0,01 kg/cm$^2$ erhalten werden, unterscheiden sich somit in diesem Beispiel um eine vorgegebene Durchflussratendifferenz von 1,5 kg/min.

Eine Abschätzung für den Zeitraum $t_{schalt}$ zwischen aufeinanderfolgenden Umschaltvorgängen zwischen den Öffnungen 401 bis 407 kann gemäß folgender Formel erhalten werden:

$$t_{schalt} \approx \frac{V_{max} - V_{min}}{\Delta F} \tag{3}$$

Dabei ist $V_{max}$ die Milchmenge im Behälter 201 bei maximalem Füllstand und $V_{min}$ die Milchmenge im Behälter 201 bei minimalem Füllstand. $\Delta F$ ist die Durchflussratendifferenz zwischen benachbarten Öffnungen.

In dem obengenanten Beispiel kann der maximale Füllstand einen Wert von 0,015 kg/cm$^2$, entsprechend einer Füllhöhe 223 von ungefähr 150 mm, haben und der minimale Füllstand kann einen Wert 0,003 kg/cm$^2$, entsprechend einer Füllhöhe 222 von ungefähr von 30 mm haben, wobei die Differenz der Milchmengen im Behälter 201 bei maximalen und minimalem Füllstand 650 g betragen kann. Wird der Milchfluss beim minimalen Füllstand von 30 mm durch Umschalten auf die nächstgrößere der Öffnungen 401 bis 407 um die Durchflussratendifferenz von 1,5 kg/min vergrößert, ergibt sich gemäß Gleichung (3) ein Zeitraum bis zum Erreichen des maximalen Füllstandes von ungefähr 26 Sekunden. Ein entsprechender Zeitraum ergibt sich bis zum Erreichen des minimalen Füllstandes bei einer Verringerung der Durchflussrate um 1,5 kg/min bei maximalem Füllstand. Aufgrund der gleichen Durchflussratendifferenz zwischen benachbarten Öffnungen 401-407 ist diese Abschätzung unabhängig von der eingestellten Größe der Abflussöffnung.

In Ausführungsformen der vorliegenden Erfindung kann das durch Gleichung (2) definierte Verhältnis zwischen der Differenz der Milchmengen im Behälter 201 bei maximalem und minimalem Füllstand und der Durchflussratendifferenz größer als ungefähr 20 Sekunden sein. Dadurch kann sichergestellt werden, dass der Zeitraum zwischen aufeinanderfolgenden Größenveränderungen der Abflussöffnung ausreichend groß ist, damit ein schnelles Umschalten zwischen benachbarten Öffnungen 401-407 der Scheibe 214, das zu einem relativ hohen Energieverbrauch der Vorrichtung 214 führen könnte, vermieden werden kann.

Die Vorrichtung 200 umfasst ferner eine Auswerteeinheit 237, die dafür ausgelegt ist, aus der eingestellten Größe der Abflussöffnung und dem von der Füllstandsmessvorrichtung 219 bestimmten Füllstand der Milch in dem Behälter 201 einen Milchfluss in den Behälter 201 zu berechnen. Die Auswerteeinheit 237 kann dabei durch das Elektronikmodul 235 bereitgestellt werden, das einen Prozessor umfassen kann, der dafür geeignet ist, die Berechnung des Milchflusses in den Behälter 201 durchzuführen.

Milch, die aus der Zuleitungseinheit 202 in den Behälter 201 fließt, kann entweder durch die Abflussöffnung des Behälters 201 aus diesem heraus und in den Sammelraum 240 fließen, oder im Behälter 201 bleiben. Wenn mehr Milch in den Behälter 201 hinein- als herausfließt, ergibt sich ein Anstieg des Füllstands des Behälters 201. Wenn die hinein- und die herausfließende Milchmenge gleich sind, bleibt der Füllstand des Behälters 201 konstant, und wenn die herausfließende Milchmenge größer als die hineinfließende Milchmenge ist, sinkt der Füllstand.

Dementsprechend gilt:

$$F_{in} = \frac{ds}{dt} A + F \tag{4}$$

Dabei ist $F_{in}$ der Milchfluss in den Behälter, ds/dt die zeitliche Ableitung des Füllstandes, A die Querschnittsfläche des Behälters und F der Milchfluss durch die Abflussöffnung.

Der erste Term auf der rechten Seite beschreibt die Differenz zwischen der in den Behälter 201 hineinfließenden Milchmenge und der herausfließenden Milchmenge, die zu einer Änderung des Füllstands s führt, und F ist der Milchfluss durch die Abflussöffnung.

Die Querschnittsfläche A des Behälters 201 ist eine geometrische Größe des Behälters 201, die bei bekannter Form des Behälters 201 berechnet werden kann. ds/dt kann aus der Differenz zwischen den Füllständen zu zwei aufeinanderfolgenden Zeitpunkten berechnet werden, und F kann aus der Größe der Abflussöffnung des Behälters und dem Füllstand berechnet werden, wie oben genauer erläutert.

Die Auswerteeinheit 237 kann dafür ausgelegt sein, den Milchfluss in den Behälter 201 gemäß Gleichung (4) zu berechnen. In anderen Ausführungsformen können andere Berechnungsverfahren verwendet werden. Beispielsweise kann die Füllstandsänderung im Behälter 201 vernachlässigt werden, und der Milchfluss kann durch eine Berechnung des durch die Abflussöffnung aus dem Behälter 201 strömenden Milchflusses näherungsweise berechnet werden. Wenn sich in dem Behälter 201 wie oben beschrieben ein Gleichgewicht zwischen Zu- und Abfluss eingestellt hat, oder nur ein langsames Steigen oder Fallen des Füllstandes auftritt, kann durch eine derartige Näherung eine gute Genauigkeit erreicht werden.

In manchen Ausführungsformen kann die Steuereinheit 236 dafür ausgelegt sein, den Füllstand im Behälter 201 innerhalb eines relativ engen Bereichs zu halten, was erreicht werden kann, indem der obere und der untere Schwellwert auf relativ nahe beieinander liegende Werte gesetzt werden. Da in solchen Ausführungsformen relativ geringe Veränderungen des Füllstandes auftreten, kann der Milchfluss in den Behälter 201 in solchen Ausführungsformen näherungsweise gleich dem Milchfluss aus dem Behälter 201 heraus sein, wenn den Milchfluss über einen Zeitraum gemittelt wird, der größer als die Zeitdauer zwischen aufeinanderfolgenden Veränderungen der Größe der Abflussöffnung ist. Alternativ oder zusätzlich zur Mittelung kann in solchen Ausführungsformen auch eine besonders feine Abstufung der einstellbaren Größen der Abflussöffnung vorgesehen sein, damit sich der Milchfluss aus dem Behälter 201 bei der Veränderung der Größe der Abflussöffnung nur relativ wenig ändert.

In manchen Ausführungsformen kann vor der Berechnung des Milchflusses in den Behälter 201 eine zeitliche Mittelung des von der Füllstandsmessvorrichtung 219 gemessenen Füllstands durchgeführt werden. Dadurch können hochfrequente Anteile des gemessenen Füllstands, die beispielsweise durch Druckstöße der Vakuumpumpe der Melkmaschine und in den Behälter 201 fallende Milchtropfen verursacht werden können, verringert werden. Durch die Mittelung können beispielsweise Frequenzanteile des Signals von der Differenzdrucksonde 227 mit Frequenzen oberhalb eines Grenzwerts im Bereich von ungefähr 1 Hz bis ungefähr 10 Hz unterdrückt werden.

In manchen Ausführungsformen kann die zeitliche Mittelung des gemessenen Füllstandes mit Hilfe eines an die Differenzdrucksonde 217 angeschlossenen Spannungs-Frequenz-Wandlers durchgeführt werden, der in dem Elektronikmodul 235 vorgesehen sein kann. Dadurch kann eine einfache und genaue Mittelung erzielt werden.

Aus dem berechneten Milchfluss in den Behälter 201 kann durch Integration eine gesamte während des Melkvorgangs in den Behälter 201 geflossene Milchmenge berechnet werden, die im Wesentlichen gleich einer vom dem Tier bei dem Melkvorgang abgegebenen Gesamtmilchmenge sein kann. Dadurch kann die Gesamtmilchmenge bestimmt werden. Die Integration kann durch numerische Integration des von der Auswerteeinheit 237 berechneten Milchflusses in den Behälter 201 durchgeführt werden. Die numerische Integration kann mit Hilfe eines im Elektronikmodul 235 vorgesehenen Prozessors durchgeführt werden.

In anderen Ausführungsformen kann die Gesamtmilchmenge auch durch Integration des Milchflusses F durch die Auslassöffnung bestimmt werden. Da der Behälter 201 am Beginn und am Ende des Melkvorgangs leer ist, entspricht ein Integral des Milchflusses aus dem Behälter 201 heraus, das durch die Integration des Milchflusses durch die Auslassöffnung erhalten wird, ebenfalls der abgegebenen Gesamtmilchmenge. Da in dieses Integral die zeitliche Ableitung des Füllstands nicht eingeht, deren Bestimmung mit einer gewissen Ungenauigkeit behaftet sein kann, kann die Gesamtmilchmenge so mit verbesserter Genauigkeit bestimmt werden. Der Behälter 201 kann eine hohe, schlanke Form haben. Beispielsweise kann der Behälter 201 eine Höhe von ungefähr 18 cm und eine Bodenfläche von ungefähr 55 cm$^2$ haben. Die Höhe des Behälters 201 kann dabei in der in Fig. 2 von oben nach unten verlaufenden Richtung gemessen werden und die Bodenfläche kann in einer in der Fig. 2 waagrechten Ebene, die senkrecht zu der Zeichenebene der Fig. 2 ist, gemessen werden. Dadurch können Auswirkungen einer Abweichung einer vertikalen Richtung des Behälters 201 von der lotrechten Richtung klein gehalten werden.

Die vertikale Richtung des Behälters 201 kann in manchen Ausführungsformen durch die Seitenwände des Behälters 201, die senkrecht sein können, definiert sein. Andere Möglichkeiten der Festlegung der vertikalen Richtung des Behälters 201 werden unten mit Bezug auf Fig. 5 genauer erläutert.

In manchen Ausführungsformen kann die Vorrichtung 200 einen Neigungssensor 239 eines bekannten Typs umfassen, der an das Elektronikmodul 235 angeschlossen oder in diesem vorgesehen sein kann. Der Neigungssensor kann dafür ausgelegt sein, eine Neigung der vertikalen Richtung des Behälters 201 gegen die lotrechte Richtung zu messen. Die Auswerteeinheit kann den gemessenen Milchfluss und/oder die gemessene Gesamtmilchmenge auf Grundlage der vom Neigungssensor gemessenen Neigung korrigieren, beispielsweise durch Multiplikation mit einem neigungsabhängigen Korrekturfaktor. Der Korrekturfaktor für einen bestimmten Neigungswinkel kann experimentell bestimmt werden, indem der Zuleitungseinheit 202 bei bekanntem Neigungswinkel eine bekannte Menge einer Flüssigkeit, beispielsweise Milch, zugeführt wird und die von der Vorrichtung 200 gemessene Gesamtmilchmenge gemessen wird. Der Korrekturfaktor ergibt sich dann aus einem Verhältnis zwischen der der Vorrichtung 200 zugeführten Flüssigkeitsmenge und der gemessenen Flüssigkeitsmenge. In der Auswerteeinheit 237 kann eine Wertetabelle mit Korrekturfaktoren für verschiedene Neigungswinkel und/oder Neigungsrichtungen gespeichert werden, und die Auswerteeinheit 237 kann mit Hilfe der Wertetabelle die Korrektur des gemessenen Milchflusses und der gemessenen Gesamtmilchmenge durchführen.

Die Vorrichtung 200 kann eine Einrichtung 241 zum Verschließen des mit der Melkmaschine verbindbaren Anschlusses 212, der in den Sammelraum 240 mündet und einen Auslass des Sammelraums 240 bildet, umfassen. Die Einrichtung 241 kann eine Platte 242 umfassen, die durch einen Drehhebel 255 mit einer Drehachse 243 verbunden sein kann. Die Drehachse 243 kann durch den Boden des Sammelraums 240 geführt sein und in diesem drehbar und abdichtend gelagert ist. Der Drehhebel 255 kann mit Hilfe einer Antriebsvorrichtung 244, die beispielsweise einen Drehmagneten mit einem Drehwinkel im Bereich von ungefähr 10° bis ungefähr 60° umfassen kann, um die Achse 243 gedreht werden. Dadurch kann die Platte 242 vor die Mündung des Anschlusses 212 bewegt werden, um diesen zu verschließen, oder von dieser entfernt werden, um den Anschluss 212 freizugeben.

Die Platte 242 kann eine plane, zylindrische Form aufweisen, aus Stahl, Kunststoff oder Hartgummi bestehen und einen Durchmesser von ungefähr 18 mm bis ungefähr 20 mm sowie eine Höhe von ungefähr 3 mm aufweisen. Die Mündung des Anschlusses 212 kann einen Innendurchmesser von 16 mm haben, so dass sie durch die Platte 242 vollständig verschlossen werden kann. Der Boden des Sammelraums 240 kann im Wesentlichen eben sein, so dass ein im Wesentlichen vollständig abdichtender Verschluss des Anschlusses 212 durch die Platte 242 erreicht werden kann.

Die Einrichtung 241 kann verwendet werden, um am Ende eines Melkvorgangs eine Verbindung zwischen der Melkmaschine und dem Melkzeug zu verschließen, so dass das Melkvakuum nicht mehr auf die Zitzen des Tiers wirkt und das Melkzeug abgenommen werden kann. Bei manchen Melkmaschinen kann dies automatisch geschehen. Die Einrichtung 241 kann anstelle bekannter, für diesen Zweck vorgesehener Vakuumabsperrventile oder pneumatischer Schlauchklemmen verwendet werden.

In manchen Ausführungsformen kann die Einrichtung 241 mit dem Elektronikmodul 235 verbunden sein. Das Elektronikmodul 235 kann Mittel zum Steuern der Einrichtung 241 umfassen. Diese können dafür ausgelegt sein, auf Grundlage des von der Auswerteeinrichtung 237 gemessenen Milchflusses in den Behälter 241 ein Ende des Melkvorgangs zu detektieren und den Anschluss 212 mit Hilfe der Einrichtung 241 beim Detektieren des Endes des Melkvorgangs zu verschließen. Zum Detektieren des Endes des Melkvorgangs kann der gemessene Milchfluss mit einem Schwellwert verglichen werden, wobei der Melkvorgang als beendet angesehen wird, wenn der Schwellwert unterschritten wird.

Das Messvolumen 253 mit der Druckmesssonde 227, die Heizvorrichtung 234, das Elektronikmodul 235, die Batterie 238 und der Neigungssensor 239 können in einem Elektronik-Kompartment 301 untergebracht sein, das seitlich vom Behälter 201 angebracht sein kann. Die Batterie 238 kann dabei im unteren Teil des Elektronik-Kompartments 301 von unten einschiebbar angebracht sein. Eine Verriegelung der Batterie 238 kann relativ schwach ausgeführt sein, so dass sich die Batterie 238 bei einem Herunterfallen der Vorrichtung 200 aus ihrer Halterung löst. Dadurch kann das Risiko eines Zerbrechens der Vorrichtung 200 beim Aufprall auf dem Boden verringert werden. Außerdem kann die Batterie 238 zum Aufladen aus der Vorrichtung 200 entfernt und unabhängig von der Vorrichtung 200 aufgeladen werden. Das kann bei der Verwendung einer großen Anzahl von Vorrichtungen 200, beispielsweise beim Melken einer Ziegenherde, bei dem beispielsweise 50 Vorrichtungen 200 gleichzeitig verwendet werden können, ein logistischer Vorteil sein.

Das Elektronik-Kompartment 301 kann eine Tastatur 304 und ein Display 302 zum Bedienen der Vorrichtung 200 und zur Ausgabe von Messwerten durch die Vorrichtung 200 aufweisen.

Fig. 5 zeigt eine schematische Querschnittsansicht einer weiteren erfindungsgemäßen Vorrichtung 500 zum Messen einer von einem Tier bei einem Melkvorgang abgegebenen Milchmenge. In Fig. 5 und in Fig. 2 werden gleiche Bezugszeichen verwendet, um einander entsprechende Teile der Vorrichtungen 200 und 500 zu bezeichnen. Außerdem wurden in Fig. 5 der Übersichtlichkeit halber einige Komponenten der Vorrichtung 500 nicht eingezeichnet. Insbesondere sind in Fig. 5 die Füllstandsmessvorrichtung 219, das Elektronikmodul 235 mit der Steuereinheit 236 und der Auswerteeinheit 237, die Batterie 238 und der Neigungssensor 239 nicht eingezeichnet. Die Vorrichtung 500 kann jedoch derartige Komponenten mit Merkmalen, die den oben beschriebenen Merkmalen der entsprechenden Komponenten entsprechen, aufweisen.

Die Vorrichtung 500 umfasst einen Behälter 201. Die Vorrichtung 500 umfasst außerdem eine Zuleitungseinheit 202, die einen Zentrifugalkopf 250 mit einem Becher 203, einen mit einer Melkmaschine verbindbaren Anschluss 205, eine Einlassöffnung 204 und einer Milchauslassöffnung 206, die in den Behälter 201 mündet, aufweist. Merkmale des Zentrifugalkopfs 250 und seiner Teile können den oben mit Bezug auf Fig. 2 beschriebenen Merkmalen entsprechen. Luft, die der Zuleitungseinheit 202 mit Milch vermischt durch den Anschluss 205 zugeführt wird, kann durch eine Bypassleitung 207, deren oberes Ende 207 im Zentrifugalkopf 250 angeordnet ist, geleitet werden, während die Milch durch die Milchauslassöffnung 206 in den Behälter 201 fließt.

In der Vorrichtung 500 verläuft die Bypassleitung 207 nicht vertikal durch den Behälter wie in der oben mit Bezug auf Fig. 2 bis 4 beschriebenen Vorrichtung 200. Stattdessen ist sie im Inneren des Behälters 201 zu einer Seitenwand des Behälters hin gebogen und wird an der Seitenwand entlang nach unten geführt. In manchen Ausführungsformen kann die Bypassleitung 207 auch durch die Seitenwand des Behälters 201 oder aus dem oberen Zentrum des Zentrifugalkopfs 203 nach oben oder nach der Seite geführt und an der Außenseite des Behälters 201 entlang geführt werden.

Unterhalb der Milchauslassöffnung 206 des Zentrifugalkopfs 250 kann im Behälter 201 eine im Wesentlichen horizontale, giebeldachförmige oder kegelförmige Verteilerplatte 551 angeordnet sein. Die Verteilerplatte 551 kann einen größeren Radius als die Milchauslassöffnung 206 aufweisen, so dass Milch, die durch die Milchauslassöffnung 206 in den Behälter 201 eintritt, auf der Verteilerplatte 551 auftrifft und von dieser zu den Seitenwänden des Behälters 201 geleitet wird.

Die Milch kann zwischen der Verteilerplatte 551 und den Seitenwänden des Behälters 201 hindurch in den Behälter 201 strömen. Ein Abstand zwischen dem Rand 553 der Verteilerplatte 551 und den Seitenwänden des Behälters 201 kann derart ausgelegt sein, dass eine Querschnittsfläche des Bereichs zwischen der Verteilerplatte 551 und den Seitenflächen größer oder gleich einer Querschnittsfläche der Milchauslassöffnung 206 ist. Dadurch kann sichergestellt werden, dass Milch, die durch die Milchauslassöffnung 206 in den Behälter 201 fließt, zwischen der Verteilerplatte 551 und den Seitenwänden des Behälters 201 abfließen kann. In manchen Ausführungsformen kann der Abstand zwischen dem Rand 553 der Verteilerplatte 551 und den Seitenwänden des Behälters 201 einen Wert in einem Bereich von ungefähr 1,5 mm bis ungefähr 3 mm, beispielsweise einen Wert von ungefähr 2 mm haben.

Durch den Rand 553 der Verteilerplatte 551 und die Seitenwände Behälters 201 wird eine Übertrittsöffnung definiert, durch die die in den Behälter 201 einfließende Milch zu den Seitenwänden des Behälters 201 strömen und an den Seitenwänden entlang nach unten fließen kann. Dadurch kann eine besonders gleichmäßige und im Wesentlichen stoßfreie Milchübergabe in den Behälter 201 erreicht und eine Schaumbildung im Behälter 201 verringert werden. Zwischen der Verteilerplatte 551 und der Deckfläche des Behälters kann sich ein Siebgitter 552 befinden, das in manchen Ausführungsformen im Wesentlichen vertikal sein kann. Durch das Siebgitter 552 können Verunreinigungen der Milch wie beispielsweise Strohreste abgefangen und aufgesammelt werden, um eine Verschmutzung des Behälters 201 zu verringern. In manchen Ausführungsformen können die Verteilerplatte 551 und das Siebgitter 552 aus dem Behälter 201 entnehmbar sein, um eine einfachere Reinigung der Verteilerplatte 552 und des Siebgitters 552 zu ermöglichen.

Das Siebgitter 552 kann in manchen Ausführungsformen vom Rand 553 der Verteilerplatte 551 beabstandet sein, um einen homogeneren Fluss der Milch über den Rand 553 zu erreichen. In manchen Ausführungsformen kann das Siebgitter 552 ungefähr 5 mm bis ungefähr 7 mm vom Rand 553 der Verteilerplatte 551 entfernt sein.

Die Vorrichtung 500 umfasst ferner eine Ableitungseinheit 211, die zum Ableiten von Milch aus dem Behälter 201 ausgebildet ist. Die Ableitungseinheit 211 weist eine Öffnung 215 auf, durch die Milch aus dem Behälter 201 in einen Sammelraum 240 strömen kann. Ein unteres Ende 210 der Bypassleitung 207 mündet in den Sammelraum 240, so dass Milch und Luft im Sammelraum 240 wieder zusammengeführt werden. Durch einen Anschluss 212 ist die Ableitungseinheit 211 mit einer Melkleitung einer Melkmaschine, die mit einem Melkvakuum beaufschlagbar ist, verbindbar.

Die Ableitungseinheit 211 umfasst Mittel 213 zum Verändern der Größe einer Abflussöffnung, durch die Milch aus dem Behälter 201 in den Sammelraum 240 fließen kann. Diese umfassen eine Scheibe 214, die vor der Öffnung 215 der Ableitungseinheit 211 angeordnet ist und mindestens zwei Öffnungen unterschiedlicher Größe aufweist. Merkmale der Scheibe 214 können den oben mit Bezug auf die Fig. 2 und 4 beschriebenen Merkmalen entsprechen.

Durch Drehen der Scheibe 214 um eine Achse 217 kann eine der Öffnungen 401-407 der Scheibe 214 vor der Öffnung 215 der Ableitungseinheit 211 positioniert werden, so dass sie eine Abflussöffnung bildet, durch die Milch aus dem Behälter 201 strömen kann. Die Größe der Abflussöffnung kann verändert werden, indem eine andere der Öffnungen 401-407 vor der Öffnung 215 positioniert wird.

Die Achse 217 ist durch den Boden des Behälters 201 in einen Raum 505 geführt, in dem sich ein Motor 218, beispielsweise ein Schrittmotor, zum Drehen der Scheibe 214 um die Achse 217 befindet. Die Achse 217 kann durch ein Achslager 501 geführt werden. Mit Hilfe von Zahnrädern 502, 503 kann eine Untersetzung zwischen der Drehzahl des Motors 218 und der Drehzahl der Scheibe 214 bereitgestellt werden, wodurch ein genaueres Positionieren der Scheibe ermöglicht werden kann und eine geringere Kraft zum Bewegen der Scheibe 214 ausreichend sein kann. Durch eine Dichtung 550 auf der Achse 217 und unterhalb der Scheibe 214, etwa in Form eines O-Rings, kann ein Eindringen von Milch in den Raum 505 im Wesentlichen verhindert werden.

Zwischen dem an der Achse 217 befestigten Zahnrad 503 und dem Achslager 501 oder, alternativ zum Achslager 501, einem anderen an dem Behälter 201 befestigten Bauteil, kann eine Druckfeder 504 angebracht sein, durch die das Zahnrad 503 von dem Achslager 501 oder dem anderen Bauteil weggedrückt und die Scheibe 214 auf den Rand der Öffnung 215 der Ableitungseinheit 211 gepresst wird. Dadurch kann eine gute Abdichtung zwischen der Scheibe 214 und dem Rand der Öffnung 215 erreicht werden, so dass keine Milch zwischen der Scheibe 214 und dem Rand der Öffnung 215 durchfließt.

Der Behälter 201 hat eine vorgegebene vertikale Richtung, die in Fig. 5 durch eine mit dem Bezugszeichen 507 bezeichnete gestrichelte Linie angedeutet ist. Während des Betriebs der Vorrichtung 500 kann die Vorrichtung 500 so ausgerichtet werden, dass die vertikale Richtung 507 lotrecht verläuft. Eine Eichung der Vorrichtung 500 kann bei dieser Orientierung durchgeführt werden.

In manchen Ausführungsformen können die Seitenwände des Behälters 201 parallel zu der vertikalen Richtung 507 sein. Beispielsweise kann der Behälter 201 zylindrisch sein, und die vertikale Richtung 507 kann durch die Richtung der Zylinderachse definiert sein.

Zumindest in einem Bereich des Behälters 201 zwischen einem minimalen Füllstand, der beim regulären Betrieb der Vorrichtung 500 nicht unterschritten wird und einem maximalen Füllstand, der beim regulären Betrieb der Vorrichtung 500 nicht überschritten wird, was, wie oben mit Bezug auf Fig. 2, 3 und 4 beschrieben, mit Hilfe einer geeigneten Steuerung der Größe der Abflussöffnung durch eine entsprechend ausgelegte Steuereinheit erreicht werden kann, kann eine Querschnittsfläche des Innenraums des Behälters 201 konstant sein.

Die Querschnittsfläche des Behälters ist dabei durch den Flächeninhalt eines Bereichs einer Ebene, der sich im Innenraum des Behälters 201 befindet, definiert, wobei die Ebene zu der vertikalen Richtung 507 des Behälters 201 senkrecht steht.

Die vorliegende Erfindung ist nicht auf Ausführungsformen mit senkrechten Seitenwänden des Behälters 201 beschränkt. In anderen Ausführungsformen können die Seitenwände des Behälters 201 oder Teile davon auch relativ zur vertikalen Richtung 507 gekrümmt sein. Die vertikale Richtung des Behälters 201 kann bei geeigneter Formgebung des Behälters auch in solchen Ausführungsformen derart festgelegt werden, dass die Querschnittsfläche des Innenraums des Behälters in einem Bereich zwischen dem minimalen und dem maximalen Füllstand konstant sein kann.

In manchen Ausführungsformen kann die Achse 217, um die die Scheibe 214 drehbar ist, zu der vertikalen Richtung 507 geneigt sein, wobei die vertikale Richtung 507 und die Achse 217 einen Winkel einschließen, der in Fig. 5 durch das Bezugszeichen 509 bezeichnet ist. Der Winkel 509 kann dabei einen Wert im Bereich von ungefähr 2 bis ungefähr 10 Grad haben.

Durch die Neigung der Achse 217 zur vertikalen Richtung 507 liegt ein Teil der Scheibe 214 unterhalb des Mittelpunkts der Scheibe 214, wenn die vertikale Richtung 507 lotrecht orientiert ist. Die Öffnung 215 der Ableitungseinheit 211 kann relativ zur Scheibe 214 derart angeordnet sein, dass diejenige der Öffnungen 401-407 der Scheibe 214, die sich momentan vor der Öffnung 215 befindet, sich unterhalb des Mittelpunkts der Scheibe befindet. Dadurch kann eine besonders tiefe Position der Abflussöffnung des Behälters 201 erreicht werden, was eine effiziente Entleerung des Behälters 201 begünstigt.

Die Bodenfläche des Behälters kann einen Bereich 510 aufweisen, in dem sie im Wesentlichen senkrecht zur vertikalen Richtung 507 ist. Ein anderer Bereich 511 der Bodenfläche kann im wesentlichen parallel zu der Unterseite der Scheibe 214 sein. Die Öffnung 215 kann sich dabei in dem Bereich 511 befinden, und der Rand der Öffnung kann unterhalb der Höhe des Bereichs 510 angeordnet sein, die in Fig. 5 durch eine gestrichelte Linie 506 dargestellt wird. Dadurch kann bei lotrechter Orientierung der vertikalen Richtung 507 der Behälter 201 soweit durch die Öffnung 215 und die vor dieser angeordneten Öffnung 401-407 der Scheibe 214 entleert werden, dass der Bereich 510 nicht mehr von Milch bedeckt ist. Dadurch kann ein Verbleib von Milchresten im Behälter 201 nach einer Entleerung des Behälters 201 nach Abschluss des Melkvorgangs verringert werden.

Die vorliegende Erfindung ist nicht auf Ausführungsformen beschränkt, in denen sich die Öffnung 215 und die Mittel 213 zum Verändern der Größe der Abflussöffnung am Boden des Behälters 201 befinden. In anderen Ausführungsformen kann die Öffnung 215 auch an einer Seitenwand des Behälters 201 angeordnet sein, und die Achse der Scheibe 214 kann durch die Seitenwand des Behälters 201 geführt sein, so dass sie auf der vertikalen Richtung 507 senkrecht steht. Die Öffnung 215 kann dabei unterhalb der Achse 217 angeordnet sein, um eine Restmenge von Milch im Behälter 201, die bei lotrechter Orientierung der vertikalen Richtung 507 nicht durch die Öffnung 215 entleerbar ist, zu verringern.

Die vorliegende Erfindung ist nicht auf Ausführungsformen beschränkt, in denen die Mittel 213 zum Verändern der Größe der Abflussöffnung eine drehbar gelagerte Scheibe mit mehreren Öffnungen umfassen, wie oben mit Bezug auf die Fig. 2 bis 5 beschrieben.

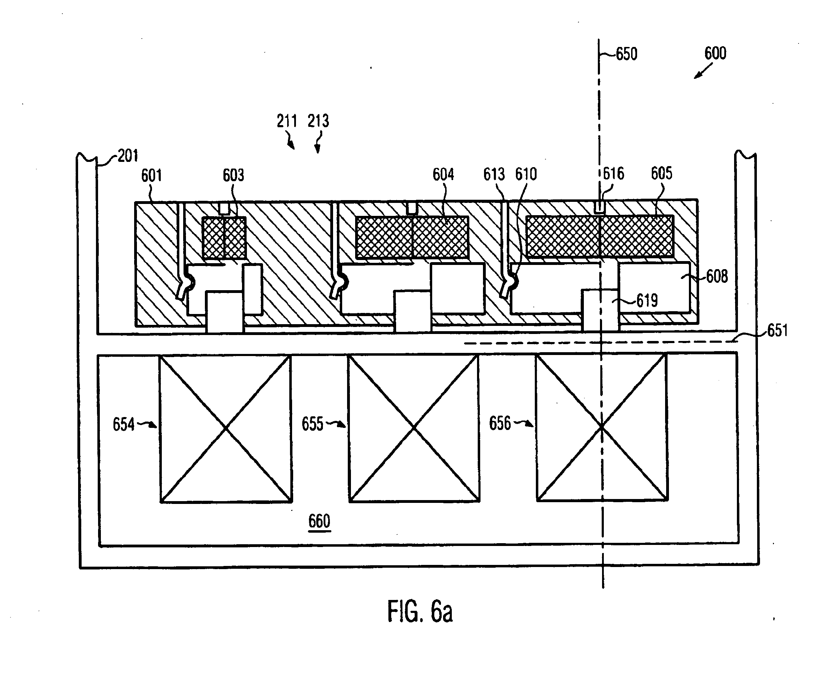

In anderen Ausführungsformen können die Mittel 213 zum Verändern der Größe der Ausflussöffnung zwei oder mehr Öffnungen der Ableitungseinheit 211 umfassen, die einzeln und/oder in Kombination miteinander geöffnet werden können, wobei die Abflussöffnung durch eine oder mehrere der Öffnungen, die geöffnet sind, gebildet wird. Derartige Mittel 213 zum Verändern der Größe der Abflussöffnung werden im Folgenden mit Bezug auf Fig. 6a bis 6c beschrieben.

Die Mittel 213 können in einer Vorrichtung 600 zum Messen einer von einem Tier bei einem Melkvorgang abgegebenen Milchmenge verwendet werden, deren weitere Merkmale denen der oben beschriebenen Vorrichtungen 200, 500 entsprechen können.

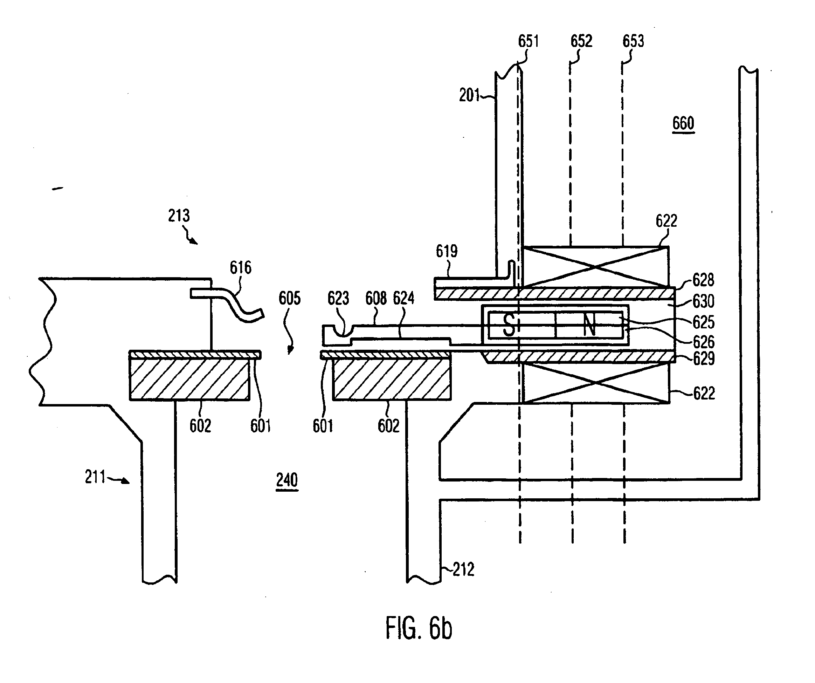

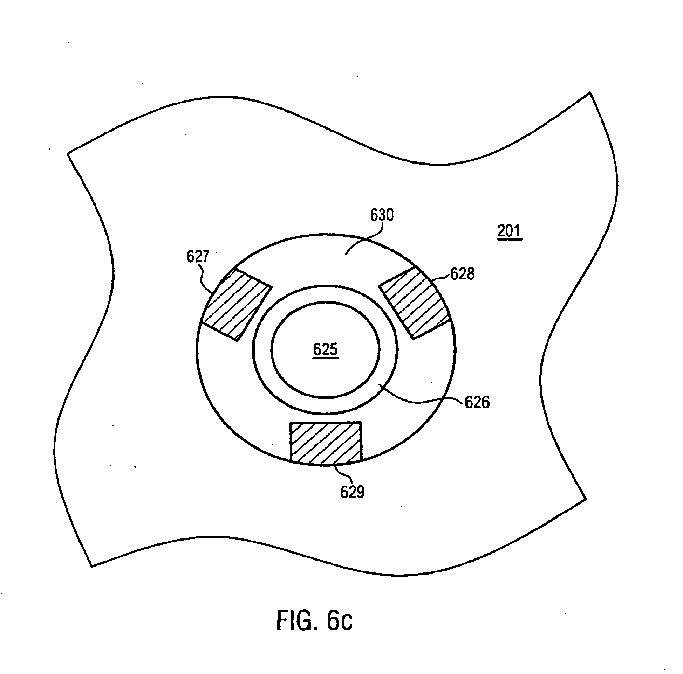

Fig. 6a zeigt eine schematische Draufsicht auf Mittel 213 zum Verändern der Größe einer Abflussöffnung aus einer vertikalen Richtung eines Behälters 201 der Vorrichtung 600 zum Messen einer von einem Tier bei einem Melkvorgang abgegebenen Milchmenge. Fig. 6b zeigt eine schematische Querschnittsansicht entlang einer Ebene 650, die zu der Zeichenebene der Fig. 6a senkrecht ist und Fig. 6c zeigt eine schematische Querschnittsansicht entlang einer Ebene 651, die sowohl zur Zeichenebene der Fig. 6a als auch zu der Ebene 650 senkrecht ist und durch eine Seitenwand des Behälters 201 verläuft.

In der in Fig. 6a gezeigten Ausführungsform sind die Mittel 213 zum Verändern der Größe der Abflussöffnung im Boden des Behälters 201 vorgesehen. In anderen Ausführungsformen können die Mittel 213 jedoch auch in einer Seitenwand des Behälters 201 vorgesehen sein.

Die Mittel 213 umfassen eine Blende 601 mit einer ersten Öffnung 603, einer zweiten Öffnung 604 und einer dritten Öffnung 605, sowie einen ersten Verschließmechanismus 654, einen zweiten Verschließmechanismus 655 und einen dritten Verschließmechanismus 656. Der erste Verschließmechanismus 654 ist dafür ausgelegt, die erste Öffnung 603 freizugeben und zu verschließen. Entsprechens sind der zweite Verschließmechanismus 655 und der dritte Verschließmechanismus 656 dafür ausgelegt, die zweite 604 bzw. dritte Öffnung 605 freizugeben oder zu verschließen.

Die Blende 601 kann in manchen Ausführungsformen eine Metallplatte mit einer Dicke im Bereich von ungefähr 3 mm bis ungefähr 6 mm umfassen. Die Blende 601 kann auf einer Metallplatte 602 befestigt sein, beispielsweise durch Kleben. Die Metallplatte 602 kann eine größere Dicke aufweisen als die Blende 601 und unter jeder der Öffnungen 603, 604, 605 eine Öffnung aufweisen, die größere Abmessungen als die darüber angeordnete der Öffnungen 603, 604 und 605 hat. Durch die Metallplatte 602 kann ein Verbiegen der Blende 601 verhindert oder zumindest verringert werden. Durch diese Anordnung kann eine besonders dünne Blende 601 verwirklicht werden, die bezüglich ihrer Durchflusscharakteristik nahezu unabhängig von der Durchflussgeschwindigkeit ist und daher einfacher kalibrierbar ist und sich deshalb besonders gut für eine möglichst gleichmäßige Massenherstellung eignet.

Die Blende 601 kann im Boden oder, in anderen Ausführungsformen, in einer Seitenwand des Behälters 201 angebracht sein, wobei sich auf einer vom Inneren des Behälters 201 abgewandten Seite der Blende 601 ein Sammelraum 240 befinden kann. Somit kann Milch aus dem Inneren des Behälters 201 durch eine oder mehrere der Öffnungen 201, die von den Verschließmechanismen 654, 655, 656 freigegeben werden, in den Sammelraum 240 strömen.

Ähnlich wie in den oben mit Bezug auf die Fig. 2 bis 5 beschriebenen Ausführungsformen kann in den Sammelraum 240 ferner eine Bypassleitung (in Fig. 6a bis 6c nicht gezeigt) münden, die dafür ausgelegt ist, Luft, die in einem Zentrifugalkopf von der Milch abgetrennt wurde, dem Sammelraum 240 zuzuführen, so dass sich Milch und Luft in dem Sammelraum 240 vermischen. In den Sammelraum 240 kann ferner ein Anschluss 212 münden, der mit der Melkleitung einer Melkmaschine verbunden werden kann.

In manchen Ausführungsformen können die Öffnungen 603, 604, 605 derart dimensioniert sein, dass der Milchfluss durch die Öffnung 605 ungefähr doppelt so groß ist wie der Milchfluss durch die Öffnung 604, und der Milchfluss durch die Öffnung 604 ungefähr doppelt so groß ist wie der Milchfluss durch die Öffnung 603. Die Milchflüsse durch die Öffnungen 603, 604, 605 selbst können, wie oben beschrieben, vom Füllstand des Behälters 201 abhängen. Da die Form der Abhängigkeit der Milchflüsse vom Füllstand aber für alle Öffnungen 603, 604, 605 im wesentlichen dieselbe ist, können die Verhältnisse zwischen den Milchflüssen durch die Öffnungen 603, 604, 605 vom Füllstand des Behälters 201 im wesentlichen unabhängig sein. Die Verhältnisse zwischen den Milchflüssen durch die Öffnungen 603, 604, 605 können durch geeignete Wahl der Querschnittsflächen und der Form der Öffnungen 603, 604, 605 eingestellt werden.

Eine Steuereinheit der Vorrichtung 600 kann in solchen Ausführungsformen dafür ausgelegt sein, die Verschließmechanismen 654, 655, 656 entsprechend den Ziffern einer Binärzahl im Bereich von Null bis Sieben zu steuern. Dabei wird die erste (kleinste) Öffnung 603 geöffnet, wenn die Ziffer mit dem niedrigsten Stellenwert der Binärzahl gleich Eins ist und geschlossen, wenn die Ziffer mit dem niedrigsten Stellenwert gleich Null ist. Die dritte (größte) Öffnung 605 wird geöffnet, wenn die Ziffer mit dem höchsten Stellenwert gleich Eins ist und geschlossen, wenn die Ziffer mit den höchsten Stellenwert gleich Null ist. Die zweite Öffnung 604 wird geöffnet, wenn die mittlere Ziffer gleich Eins ist und geschlossen, wenn die mittlere Ziffer gleich Null ist.

Wenn die Binärzahl den Wert Null hat, sind somit alle drei Öffnungen 603, 604, 605 geschlossen. Hat die Binärzahl den Wert Sieben, sind alle drei Öffnungen 603, 604, 605 geöffnet. Bei Werten im Bereich von Eins bis Sechs ist jeweils ein Teil der Öffnungen 603, 604, 605 geöffnet und ein Teil der Öffnungen 603, 604, 605 geschlossen. Der gesamte Milchfluss durch die Öffnungen 603, 604, 605 ist dabei im Wesentlichen gleich einen Produkt aus dem Wert der Binärzahl und dem Milchfluss durch die kleinste der Öffnungen 603, 604, 605.

Diejenigen der Öffnungen 603, 604, 605, die gerade geöffnet sind, bilden eine Ausflussöffnung, durch die Milch aus dem Behälter 201 in den Sammelraum 240 abgeleitet wird. Ist mehr als eine der Öffnungen 603, 604, 605 geöffnet, besteht die Ausflussöffnung aus mehreren Teilöffnungen, die durch Bereiche der Blende 601 und/oder Teile der Verschlussmechanismen 654, 655, 656 voneinander getrennt sind, und die Ausflussöffnung wird durch die Gesamtheit der mehreren gerade geöffneten der Öffnungen 603, 604, 605 gebildet. Ist nur eine der Öffnungen 603, 604, 605 geöffnet, wird die Ausflussöffnung durch die gerade geöffnete der Öffnungen 603, 604, 605 gebildet.

Wird die Binärzahl, entsprechend deren Stellen die Verschließmechanismen 654, 655, 656 gesteuert wird, um Eins erhöht oder erniedrigt, vergrößert bzw. verringert sich der Milchfluss durch die Ausflussöffnung um eine vorgegebene Durchflussratendifferenz, die dem Milchfluss durch die Öffnung 603 bei geöffneter Öffnung 603 entspricht. Die Durchflussratendifferenz ist dabei für jeden Ausgangswert der Binärzahl im wesentlichen gleich.

Ähnlich wie in den oben mit Bezug auf die Fig. 2 bis 5 beschriebenen Ausführungsformen kann ein Verhältnis zwischen einer Differenz einer Milchmenge in dem Behälter 201 bei maximalem Füllstand und einer Milchmenge in dem Behälter 201 bei minimalem Füllstand einerseits und der Durchflussratendifferenz andererseits größer als 20 Sekunden sein, was, dabei helfen kann, die Anzahl der Umschaltvorgänge zwischen geöffnetem und geschlossenem Zustand der Öffnungen 603, 604, 605 zu verringern.

Ähnlich wie in den oben mit Bezug auf die Fig. 2 bis 5 beschriebenen Ausführungsformen kann für mindestens eine oder alle der einstellbaren Größen der Abflußöffnung gelten, dass ein Bereich von Milchflüssen, in dem sich bei der jeweiligen Größe der Abflußöffnung ein Gleichgewichtszustand mit einem Füllstand zwischen dem minimalen und dem maximalen Füllstand einstellen kann, ein Teilbereich eines Bereichs von ungefähr 0,5 kg/min bis ungefähr 12 kg/min ist.

Die vorliegende Erfindung ist nicht auf Ausführungsformen beschränkt, in denen die Öffnungen 603, 604, 605 in einer gemeinsamen Blende 601 ausgebildet sind. In anderen Ausführungsformen können mehrere Blenden vorgesehen sein, in denen jeweils eine oder mehrere der Öffnung 603, 604, 605 ausgebildet sind.

Die vorliegende Erfindung ist ferner nicht auf Ausführungsformen beschränkt, in denen drei Öffnungen 603, 604, 605 vorgesehen sind. In anderen Ausführungsformen kann eine größere oder kleinere Anzahl von Öffnungen vorgesehen sein. Die Öffnungen können dabei unterschiedliche Größen aufweisen und derart ausgelegt sein, dass die Milchflüsse durch die Öffnungen jeweils gleich einem Produkt des Milchflusses durch die kleinste Öffnung und einer Potenz von Zwei sind, und Verschließeinrichtungen, die den Öffnungen zugeordnet sind, können entsprechend den Ziffern einer Binärzahl gesteuert werden, um einige oder alle der Öffnungen zu verschließen.

Die vorliegende Erfindung ist jedoch nicht auf Ausführungsformen beschränkt, in denen die Öffnungen entsprechend den Ziffern einer Binärzahl geöffnet oder geschlossen werden. In anderen Ausführungsformen können mehrere Öffnungen unterschiedlicher Größe vorgesehen sein, von denen jeweils eine geöffnet und die anderen geschlossen werden, oder es können mehrere gleichgroße Öffnungen vorgesehen sein, und ein Milchfluss durch die Öffnungen kann durch Verändern der Anzahl der geöffneten Öffnungen gesteuert werden.

Im folgenden wird der Verschließmechanismus 656 zum Verschließen und Freigeben der dritten Öffnung 605 genauer erläutert. Die Verschließmechanismen 654, 655 zum Verschließen und Freigeben der ersten Öffnung 603 und der zweiten Öffnung 604 können einen im Wesentlichen identischen Aufbau haben.

Der Verschließmechanismus 656 umfasst einen Schieber 608, der zwischen einer ersten Stellung, in der er die Öffnung 605 bedeckt und dadurch verschließt, und einer zweiten Stellung, in der er die Öffnung 605 freigibt, beweglich ist. Der Schieber 608 kann einen Teil 626 aufweisen, der durch Schienen 627, 628, 629, die mit dem Behälter 201 verbunden sind, geführt wird, so dass der Schieber 608 entlang einer Führungsrichtung, die zu der dem Innenraum des Behälters 201 zugewandten Oberfläche der Blende 601 parallel ist, linear bewegt werden kann. Der Teil 626 des Schiebers 608 kann dabei in manchen Ausführungsformen eine im Wesentlichen zylindrische Form aufweisen und im Inneren eines im Wesentlichen zylindrischen Hohlraums 630 beweglich sein.

Der Teil 636 des Schiebers umfasst einen Permanentmagneten 625. Ein Elektromagnet 622 ist derart angeordnet, dass er bei Stromfluss durch den Elektromagneten 622 eine Kraft auf den Permanentmagneten 625 ausübt. Abhängig vom der Richtung des Stromflusses kann der Permanentmagnet 625 und der mit ihm verbundene Schieber 608 entweder zu der Öffnung 605 hin bewegt werden, um diese zu verschließen, oder von der Öffnung 605 wegbewegt werden, um diese freizugeben. Der Elektromagnet 622 kann eine Spule umfassen, die den Teil 626 des Schiebers 608, in dem sich der Permanentmagnet 625 befindet, ringförmig umschließt.

Wenn sich der Schieber 608 bewegt, kann er auf der Oberfläche der Blende 601 gleiten. Durch eine Ausnehmung 624 auf der der Blende 601 zugewandten Seite des Schiebers 608 kann eine Reibung zwischen dem Schieber 608 und der Blende 601 verringert werden.

Der Hohlraum 630 erstreckt sich durch die Seitenwand des Behälters 201 hindurch ins Innere eines an den Behälter 201 angrenzenden Raums 660, in dem sich der Elektromagnet 622 befindet und der in manchen Ausführungsformen das Elektronik-Kompartment 301 (Fig. 3) sein kann. Der Hohlraum 630 kann dabei flüssigkeitsdichte Wände aufweisen, um ein Eindringen von Flüssigkeit im Behälter wie beispielsweise Milch und/oder Reinigungsflüssigkeit in den Raum 660 zu verhindern.

Der Teil 626 des Schiebers 608 kann einen Außendurchmesser haben, der kleiner als der Innendurchmesser des Hohlraums 630 ist, so dass zwischen dem Teil 626 des Schiebers 608 und den Wänden des Hohlraums Flüssigkeit durchströmen kann, wenn sich der Schieber 608 bewegt. Dadurch kann ein Widerstand, der beim Bewegen des Schiebers 608 überwunden werden muss, verringert werden, und der Flüssigkeitsaustausch kann dabei helfen, Verschmutzungen des Hohlraums 630 zu vermeiden.

An der Seitenwand des Behälters 201 kann eine Führungsverlängerung 619 angebracht sein, die ins Innere des Behälters 201 ragt. Dadurch kann eine verbesserte Führung des Schiebers 608 erreicht werden, insbesondere dann, wenn er sich an oder in der Nähe der Stellung befindet, in der er die Öffnung 605 verschließt.

In Fig. 6b bezeichnet eine erste gestrichelte Linie 652 eine Position des vom Innenraum des Behälters 201 abgewandten Endes des Permanentmagneten 625 in der Stellung, in der der Schieber 608 die Öffnung 605 bedeckt. Eine zweite Linie 653 bezeichnet eine Position des vom Innenraum des Behälters 201 abgewandten Endes des Permanentmagneten 625 in der Stellung, in der der Schieber 608 die Öffnung 605 freigibt. Die Positionen 652, 653 können jeweils um ein Drittel der Länge des Elektromagneten 622 von dessen Enden entfernt sein. Dadurch kann eine relativ große Kraftwirkung des Elektromagneten 622 auf den Permanentmagneten 625 und eine eindeutige Bewegungsrichtung des Permanentmagneten 625 bei Stromfluss durch den Elektromagneten 622 erreicht werden.

Der Schieber 608 kann eine erste Kerbe 623 aufweisen, die beispielsweise auf einer von der Blende 601 abgewandten Oberseite des Schiebers 608 angeordnet sein kann, und eine zweite Kerbe 610, die beispielsweise an einer Seite des Schiebers 608 angeordnet sein kann. Am Behälter 201 können eine erste Feder 616, die in der geschlossenen Stellung des Schiebers 608 in die erste Kerbe 623 eingreift und eine zweite Feder 613, die in der geöffneten Stellung des Schiebers 608 in die zweite Kerbe 613 eingreift, angebracht sein. Dadurch kann der Schieber 608 sowohl in der geöffneten als auch in der geschlossenen Stellung festgehalten werden, so dass er beim Abschalten des Stromflusses durch den Elektromagneten 622 in seiner Position verharrt. Ein Stromfluss durch den Elektromagneten 622 ist somit nur zum Verändern der Position des Schiebers 608 erforderlich (Impulsmagnet-Technik). Dadurch kann ein Stromverbrauch der Vorrichtung 600 auch bei relativ großer Magnetkraft besonders niedrig gehalten werden, was insbesondere bei einem mobilen Betrieb mit Batterien ein Vorteil sein kann.

In anderen Ausführungsformen können zum Festhalten des Schiebers anstelle der Federn 613, 616 geeignet positionierte Permanentmagneten vorgesehen sein, die auf den Permanentmagneten 625 des Schiebers 608 wirken.

Die Steuereinrichtung 236 der Vorrichtung 600 kann mit den Verschließmechanismen 654, 655, 656 verbunden sein und dafür ausgelegt sein, die Verschließmechanismen 654, 655, 656 zum Verschließen und Freigeben der Öffnungen 603, 604, 605 zu steuern. In Ausführungsformen, in denen die Verschließmechanismen 654, 655, 656 wie oben beschrieben aufgebaut sind, kann die Steuereinheit 236 dafür ausgelegt sein, einen elektrischen Strom durch die Elektromagneten der Verschießmechanismen 654, 655, 656 zu steuern.

In weiteren Ausführungsformen können die Verschließmechanismen 654, 655, 656 auch pneumatisch, beispielsweise durch eine Membran oder einen Kolben, einzeln oder in Kombination geöffnet oder geschlossen werden.

In weiteren Ausführungsformen können die Mittel 213 eine Scheibe umfassen, die entlang einer Führungsrichtung linear beweglich ist, wobei die mindestens zwei Öffnungen entlang der Führungsrichtung angeordnet sind und eine Unterseite der Scheibe den Rand der Öffnung 215 der Ableitungseinheit 211 berührt. Die Scheibe kann in solchen Ausführungsformen die Form eines im Wesentlichen rechteckigen Bandes mit den mindestens zwei Öffnungen haben, und die Führungsrichtung kann sich in einer Längsrichtung des Bandes erstrecken. Die lineare Bewegung der Scheibe kann mit Hilfe eines Linearantriebs, beispielsweise mit Hilfe eines Permanentmagneten und eines Elektromagneten, der auf den Permanentmagneten bei Stromfluss durch den Elektromagneten eine Kraft ausübt, ähnlich wie oben mit Bezug auf die Fig. 6a bis 6c beschrieben, bewirkt werden.

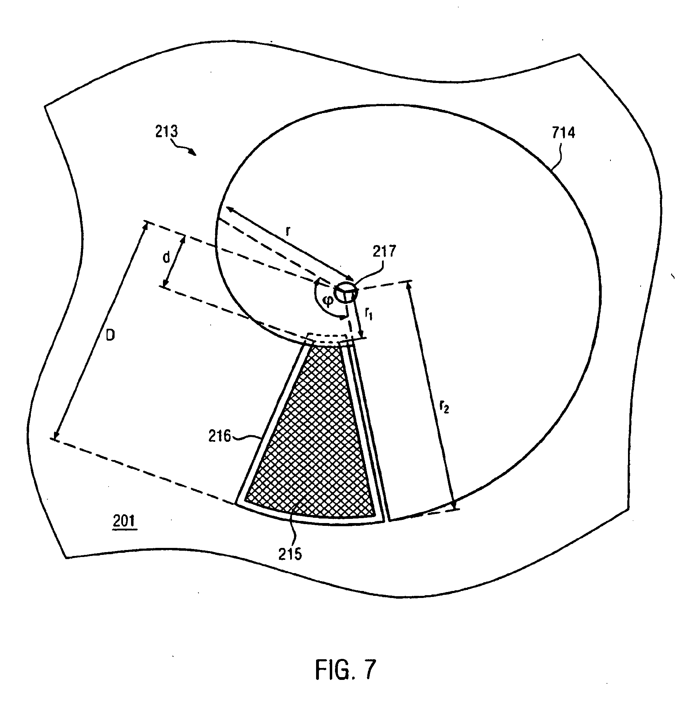

In weiteren Ausführungsformen kann die Größe der Abflussöffnung kontinuierlich veränderbar sein. Eine derartige Ausführungsform wird im Folgenden mit Bezug auf Fig. 7 beschrieben.

Fig. 7 zeigt eine schematische Ansicht von Mitteln 213 zum Verändern der Größe einer Abflussöffnung, die in manchen Ausführungsformen anstelle der oben mit Bezug auf die Fig. 2 bis 5 beschriebenen Mittel 213 verwendet werden können. Die Mittel 213 umfassen eine Scheibe 714, die um eine Achse 217 drehbar ist. Merkmale der Achse 217 können dabei der oben mit Bezug auf die Fig. 2 bis 5 beschriebenen Achse 217 entsprechen. Insbesondere kann die Achse 217 mit einem Scheibenantrieb 218 verbunden sein, der dafür ausgelegt ist, die Scheibe 714 um die Achse 217 zu drehen. In manchen Ausführungsformen können auch Zahnräder ähnlich den oben mit Bezug auf Fig. 5 beschriebenen Zahnrädern 502, 503, ein Achslager ähnlich dem oben mit Bezug auf Fig. 5 beschriebenen Achslager 501, eine Dichtung ähnlich der oben mit Bezug auf Fig. 5 beschriebenen Dichtung 550 und eine Feder zum Drücken der Scheibe 714 auf den Rand der Öffnung 215 ähnlich der oben mit Bezug auf Fig. 5 beschriebenen Feder 504 vorgesehen sein.

Ein Radius r der Scheibe 714 weist eine Abhängigkeit von einem Winkel $\varphi$ um die Achse 217 auf, wobei der Radius r von einem ersten Radius $r_1$ bei einem Winkel $\varphi$ von 0° bis zu einem zweiten Radius $r_2$ bei einem Winkel $\varphi$ von 360° zunimmt. Dadurch kann ein Umriss der Scheibe 714 eine schneckenhausförmige Gestalt erhalten. Der Radius r muss dabei nicht, wie in Fig. 7 dargestellt, im Uhrzeigersinn zunehmen. In anderen Ausführungsformen kann der Radius r auch in einer dem Uhrzeigersinn entgegengesetzten Richtung zunehmen.

Ein Abstand d zwischen der Achse 217 und einem Teil des Rands der Öffnung 215 der Ableitungseinheit 211 auf der der Achse 217 zugewandten Seite der Öffnung 215 kann größer oder ungefähr gleich dem ersten Radius $r_1$ sein und ein Abstand D zwischen der Achse 217 und einem von der Achse 217 abgewandten Teil des Rands der Öffnung 215 kann kleiner oder ungefähr gleich dem zweiten Radius $r_2$ sein. Dadurch kann die Öffnung 215 je nach der Stellung der Scheibe 714 ganz oder teilweise von der Scheibe 714 abgedeckt werden, oder die Scheibe 714 kann die Öffnung 215 freigeben.

Die Öffnung 215 bzw. derjenige Teil der Öffnung 215, der nicht von der Scheibe 714 abgedeckt wird, bildet eine Abflussöffnung, durch die Milch aus dem Behälter 201 strömen kann. Durch Drehen der Scheibe 714 kann eine Größe der Abflussöffnung zwischen einer geöffneten Stellung, in der sich ein Bereich der Scheibe 714 mit einem Radius, der ungefähr gleich dem ersten Radius $r_1$ ist, neben der Öffnung 215 befindet und einer geschlossenen Stellung, in der sich ein Bereich der Scheibe 714 mit einem Radius, der ungefähr gleich dem zweiten Radius $r_2$ ist, neben und über der Öffnung 215 befindet, kontinuierlich verändert werden.

In manchen Ausführungsformen kann der Radius r der Scheibe 714 eine exponentielle Abhängigkeit von dem Winkel $\varphi$ aufweisen, so dass der Rand der Scheibe 714 in Wesentlichen die Form einer logarithmischen Spirale hat. In anderen Ausführungsformen kann eine Irisblende, eine Katzenaugenblende oder ein in die Öffnung 215 eintauchbarer Konus verwendet werden, um die Größe der Abflussöffnung kontinuierlich zu verändern.

In Ausführungsformen mit kontinuierlich veränderlicher Größe der Abflussöffnung kann zum Verstellen der Größe der Abflussöffnung ein Motor, der ein Schrittmotor oder Getriebemotor sein kann, verwendet werden. Anstelle eines Motors kann auch ein pneumatischer oder magnetischer Dreh- oder Linearantrieb verwendet werden. Der Antrieb kann zum Bereitstellen einer relativ hohen Stellgenauigkeit ausgelegt sein, um eine reproduzierbare Einstellung der Größe der Abflussöffnung über den gesamten Wertebereich zu ermöglichen.

In Ausführungsformen der vorliegenden Erfindung, in denen die Größe der Abflussöffnung kontinuierlich verstellbar ist, kann der Milchfluss durch die Abflussöffnung für mehrere diskrete Werte der Größe der Abflussöffnung als Funktion des Füllstands des Behälters 201 geeicht werden. Beispielsweise kann in der mit Bezug auf Fig. 7 beschriebenen Ausführungsform der Milchfluss durch die Abflussöffnung für mehrere Drehwinkel der Scheibe 714 geeicht werden. Für Größen der Abflussöffnung zwischen diesen Größen kann eine Interpolation zwischen den für benachbarte Größen der Abflussöffnung bestimmten Milchflüssen durchgeführt werden, um den Milchfluss durch die Abflussöffnung zu bestimmen. Für die diskreten Werte der Größe der Abflussöffnung kann der Milchfluss wie oben mit Bezug auf die Fig. 2 bis 5 beschrieben aus der Größe der Abflussöffnung und dem Füllstand berechnet werden.

In manchen Ausführungsformen können die Öffnungen 401 bis 407 der Scheibe 214 bzw. die Öffnungen 603, 604, 605 Ränder haben, die im wesentlichen vertikal zur Oberfläche der Scheibe 214 bzw. der Oberfläche der Blende 601 sind. Im Vergleich zu Ausführungsformen, in denen die Ränder der Öffnungen 401 bis 407 bzw. der Öffnungen 603, 604, 605 abgerundet sind, kann dadurch eine verbesserte Messgenauigkeit der Vorrichtung 200, 500, 600 erreicht werden, da vertikale und scharfkantige Ränder mit besonders großer Genauigkeit gefertigt werden können. Auch der Rand der oben mit Bezug auf Fig. 7 beschriebenen Scheibe 714 kann vertikale und scharfkantige Ränder aufweisen.

Beim Betrieb der Vorrichtungen 200, 500 kann die von einem Tier beim Melkvorgang abgegebene Milch über die Zuleitungseinheit 202 dem Behälter 201 zugeführt werden. Der Füllstand der Milch in dem Behälter 201 kann, wie oben beschrieben, mit Hilfe der Füllstandsmessvorrichtung 219 gemessen werden. In Abhängigkeit von dem gemessenen Füllstand kann die Größe der Abflussöffnung wie oben beschrieben verändert werden, wobei die Größe der Abflussöffnung derart eingestellt wird, dass der Füllstand der Milch in dem Behälter 201 in einem vorgegebenen Bereich, der durch den minimale Füllstand und den maximale Füllstand, oder durch Schwellwerte, bestimmt sein kann, bleibt. Der Milchfluss in den Behälter 201 und/oder die gesamte in den Behälter 201 geflossene Milchmenge können wie oben beschrieben aus der eingestellten Größe der Abflussöffnung und dem gemessenen Füllstand berechnet werden.

## Patentansprüche

1. Vorrichtung (200, 500, 600) zum Messen einer von einem Tier bei einem Melkvorgang abgegebenen Milchmenge, umfassend:

    einen Behälter (201);
    eine Zuleitungseinheit (202), die zum Zuführen von Milch in den Behälter (201) ausgebildet und mit einem Melkzeug einer Melkmaschine verbindbar ist;
    eine Ableitungseinheit (211), die zum Ableiten von Milch aus dem Behälter (201) ausgebildet und mit einer Melkleitung der Melkmaschine, die mit einem Melkvakuum beaufschlagbar ist, verbindbar ist, wobei die Ableitungseinheit (211) Mittel (213) zum Verändern einer Größe einer Abflussöffnung, durch welche die Milch beim Ableiten aus dem Behälter (201) strömt, umfasst, wobei mindestens zwei verschiedene Größen der Abflussöffnung, die einen Durchfluss von Milch durch die Abflussöffnung zulassen, einstellbar sind;
    eine Füllstandsmessvorrichtung (219), die dafür ausgebildet ist, einen Füllstand von Milch in dem Behälter (201) zu messen; und
    eine Steuereinheit (236), die dafür ausgebildet ist, die Mittel (213) zum Verändern der Größe der Abflussöffnung in Abhängigkeit von dem von der Füllstandsmessvorrichtung (219) bestimmten Füllstand der Milch in dem Behälter (201) zu steuern, um die Größe der Abflussöffnung derart einzustellen, dass der Füllstand in einem vorgegebenen Bereich bleibt;
    **gekennzeichnet durch**
    eine Auswerteeinheit (237), die dafür ausgebildet ist, aus der eingestellten Größe der Abflussöffnung und dem von der Füllstandsmessvorrichtung (219) gemessenen Füllstand einen Milchfluss in den Behälter (201) zu berechnen.

2. Vorrichtung (200, 500, 600) nach Anspruch 1, wobei die Steuereinheit (236) dafür ausgelegt ist, die Abflussöffnung zu vergrößern, wenn der Füllstand des Behälters (201) einen vorgegebenen oberen Schwellwert überschreitet und die Abflussöffnung zu verkleinern, wenn der Füllstand einen vorgegebenen unteren Schwellwert unterschreitet, und wobei die Steuereinheit (236) dafür ausgelegt ist, beim Überschreiten des oberen Schwellwerts und/oder beim Unterschreiten des unteren Schwellwerts auf Grundlage des von der Auswerteeinheit (237) berechneten Milchflusses zu bestimmen, ob sich bei einer der mindestens zwei Größen der Abflußöffnung ein Gleichgewicht zwischen dem Milchfluß in den Behälter (201) und dem Milchfluß aus dem Behälter (201) heraus einstellt und, falls dies der Fall ist, diese Größe der Abflußöffnung einzustellen.

3. Vorrichtung (200, 500, 600) nach Anspruch 1 oder 2, wobei die Mittel (213) zum Verändern der Größe der Abflußöffnung derart ausgebildet sind, dass drei oder mehr verschiedene Größen der Abflußöffnung, die einen Durchfluß von Milch durch die Abflußöffnung zulassen, einstellbar sind.

4. Vorrichtung (200, 500, 600) nach einem der Ansprüche 1 bis 3, wobei mindestens eine, insbesondere jede, der einstellbaren Größen der Abflußöffnung, die einen Durchfluß von Milch durch die Abflußöffnung zulassen, derart ausgelegt ist, dass sich bei einem Milchfluß in den Behälter (201) in einem Teilbereich eines Bereichs von 0,5 kg/min bis 12 kg/min ein Gleichgewicht zwischen dem Milchfluß in den Behälter (201) und dem Milchfluß aus dem Behälter (201) bei einem Füllstand in dem vorgegebenen Bereich einstellt.

5. Vorrichtung (200, 500) nach einem der vorhergehenden Ansprüche, wobei die Mittel (213) zum Verändern einer Größe der Abflussöffnung umfassen:

   eine Scheibe (214) mit mindestens zwei Öffnungen (401-407) unterschiedlicher Größe, wobei die Scheibe (214) vor einer Öffnung (215) der Ableitungseinheit (211) angeordnet ist und relativ zu der Öffnung (215) der Ableitungseinheit (211) derart beweglich ist, dass jede der mindestens zwei Öffnungen (401-407) der Scheibe (214) durch Bewegen der Scheibe (214) vor die Öffnung (215) der Ableitungseinheit (211) bringbar ist, so dass die Milch beim Ableiten aus dem Behälter (201) durch eine der mindestens zwei Öffnungen (401-407) der Scheibe (214), die sich vor der Öffnung (215) der Ableitungseinheit (211) befindet, strömt; und
   einen Scheibenantrieb (218) zum Bewegen der Scheibe (214) relativ zu der Öffnung (215) der Ableitungseinheit (211).;
   wobei die Scheibe (214) optional um eine zu einer Unterseite der Scheibe (214) senkrechte Achse (217) drehbar ist, die mindestens zwei Öffnungen (401-407) der Scheibe (214) um die Achse (217) herum angeordnet sind und die Unterseite der Scheibe (214) einen Rand der Öffnung (215) der Ableitungseinheit (211) berührt.

6. Vorrichtung (200, 500) nach Anspruch 5, wobei der Behälter (201) eine vertikale Richtung (507) aufweist, wobei zumindest in einem Bereich des Behälters (201) zwischen einer einem minimalen Füllstand entsprechenden Füllhöhe und einer einem maximalen Füllstand entsprechenden Füllhöhe eine Querschnittsfläche eines Innenraums des Behälters (201) in jeder Ebene, die zu der vertikalen Richtung (507) senkrecht ist und den Behälter (201) innerhalb des Bereichs zwischen den dem minimalen und dem maximalen Füllstand entsprechenden Füllhöhen schneidet, konstant ist, und wobei die Achse (217), um die die Scheibe (214) drehbar ist, zu der vertikalen Richtung (507) des Behälters (201) geneigt, insbesondere senkrecht, ist.

7. Vorrichtung (200, 500) nach einem der Ansprüche 5 und 6, wobei die Scheibe (214) einen Bereich (408) aufweist, in dem sich keine Öffnung befindet, insbesondere neben einer größten der mindestens zwei Öffnungen (401-407), und wobei die Scheibe (214) relativ zu der Ableitungseinheit (211) derart beweglich ist, dass der Bereich (408) der Scheibe (214), in dem sich keine Öffnung befindet, durch Bewegen der Scheibe (214) vor die Öffnung (215) der Ableitungseinheit (211) bringbar ist, um die Öffnung (215) der Ableitungseinheit (211) zu verschließen.

8. Vorrichtung (200, 500) nach einem der Ansprüche 5 bis 7, wobei die Scheibe (214) mehrere Öffnungen (401-407) aufweist, deren Größe derart ausgebildet ist, dass sich Durchflussraten der Milch durch jeweils zwei benachbarte Öffnungen (401-407) bei einem vorgegebenen Füllstand des Behälters (201) um eine vorgegebene Durchflussratendifferenz unterscheiden,
   wobei optional ein Verhältnis zwischen einer Differenz einer Milchmenge in dem Behälter (201) bei maximalem Füllstand und einer Milchmenge in dem Behälter (201) bei minimalem Füllstand einerseits und der Durchflussratendifferenz andererseits größer als 20 Sekunden ist.

9. Vorrichtung (200, 500, 600) nach einem der Ansprüche 1 bis 8, die zusätzlich einen Neigungssensor (239) umfasst, wobei die Auswerteeinheit (237) dafür ausgelegt ist, eine Korrektur des berechneten Milchflusses auf Grundlage einer vom Neigungssensor (239) gemessenen Neigung durchzuführen.

10. Vorrichtung (200, 500, 600) nach einem der Ansprüche 1 bis 9, wobei die Ableitungseinheit (211) einen Sammelraum (240) umfasst, der einen ersten Einlass, der mit der Auslassöffnung verbunden ist, einen zweiten Einlass, der mit einer Bypassleitung (207) für Transportluft, die von der Milch abgetrennt wird, verbunden ist und einen Auslass, der mit der Melkleitung der Melkmaschine verbindbar ist, umfasst, und wobei die Vorrichtung eine Einrichtung (241) zum Verschließen des Auslasses umfasst.

11. Verfahren zum Messen einer von einem Tier bei einem Melkvorgang abgegebenen Milchmenge, umfassend:

   Zuführen der von dem Tier bei dem Melkvorgang abgegebenen Milch in einen Behälter (201);
   Messen eines Füllstands der Milch in dem Behälter (201); und
   Verändern einer Größe einer Abflussöffnung, durch die Milch aus dem Behälter (201) strömen kann, in Abhängigkeit von dem gemessenen Füllstand der Milch in dem Behälter (201), wobei die Abflussöffnung derart ausgebildet ist, dass mindestens zwei verschiedene Größen der Abflussöffnung, die einen Durchfluss von Milch durch die Abflussöffnung zulassen, einstellbar sind, und wobei die Größe der Abflussöffnung derart eingestellt wird, dass der Füllstand der Milch in dem Behälter (201) in einem vorgegebenen Bereich bleibt;

**gekennzeichnet durch**
Berechnen eines Milchflusses in den Behälter (201) aus der eingestellten Größe der Abflussöffnung und dem gemessenen Füllstand.

**12.** Verfahren nach Anspruch 11, wobei die Größe der Abflussöffnung vergrößert wird, wenn der Füllstand des Behälters (201) einen vorgegebenen oberen Schwellwert überschreitet und die Größe der Abflussöffnung verkleinert wird, wenn der Füllstand des Behälters (201) einen vorgegebenen unteren Schwellwert unterschreitet; und
wobei beim Überschreiten des oberen Schwellwerts und/oder beim Unterschreiten des unteren Schwellwerts auf Grundlage des berechneten Milchflusses in den Behälter (201) bestimmt wird, ob sich bei einer der mindestens zwei Größen der Abflußöffnung ein Gleichgewicht zwischen dem Milchfluss in den Behälter (201) und dem Milchfluss aus dem Behälter (201) einstellt, und, falls dies der Fall ist, diese Größe der Abflussöffnung eingestellt wird.

**13.** Verfahren nach Anspruch 11 oder 12, wobei die Abflußöffnung derart ausgebildet ist, dass drei oder mehr verschiedene Größen der Abflußöffnung, die einen Durchfluß von Milch durch die Abflußöffnung zulassen, einstellbar sind.

**14.** Verfahren nach einem der Ansprüche 11 bis 13, wobei mindestens eine, insbesondere jede, der einstellbaren Größen der Abflußöffnung, die einen Durchfluß von Milch durch die Abflußöffnung zulassen, derart ausgelegt ist, dass sich bei einem Milchfluß in den Behälter (201) in einem Teilbereich eines Bereichs von 0,5 kg/min bis 12 kg/min ein Gleichgewicht zwischen dem Milchfluß in den Behälter (201) und dem Milchfluß aus dem Behälter (201) bei einem Füllstand in dem vorgegebenen Bereich einstellt.

**15.** Verfahren nach einem der Ansprüche 11 bis 14, das ferner eine Berechnung der von dem Tier bei dem Melkvorgang abgegebenen Gesamtmilchmenge durch zeitliche Integration eines aus der Größe der Abflussöffnung und dem Füllstand berechneten Milchflusses aus dem Behälter (201) heraus umfasst.

**16.** Verfahren nach einem der Ansprüche 11 bis 15, wobei das Verändern der Größe der Abflussöffnung ein Bewegen einer Scheibe (214) mit zwei oder mehr Öffnungen (401-407) unterschiedlicher Größe, die vor einer Öffnung (215) einer Ableitungseinheit (211) des Behälters (201) angebracht ist, umfasst, wobei eine der Öffnungen (401-407) der Scheibe (214) vor die Öffnung (215) der Ableitungseinheit (211) des Behälters (201) gebracht wird, so dass die Milch durch die Öffnung (401-407) der Scheibe (214) aus dem Behälter (201) strömen kann.

**17.** Verfahren nach einem der Ansprüche 11 bis 16, wobei das Berechnen des Milchflusses umfasst:

Bestimmen einer zeitlichen Änderung der Milchmenge in dem Behälter (201) auf Grundlage einer zeitlichen Änderung des Füllstands;
Bestimmen einer Abflussrate aus dem Behälter (201) auf Grundlage der Größe der Abflussöffnung und des Füllstands; und
Berechnen einer Summe der zeitlichen Änderung der Milchmenge in dem Behälter (201) und der Abflussrate.

**18.** Verfahren nach einem der Ansprüche 11 bis 17, wobei eine Neigung des Behälters (201) gemessen wird und eine Korrektur des gemessenen Milchflusses auf Grundlage der gemessenen Neigung durchgeführt wird.

**Claims**

**1.** An apparatus (200, 500, 600) for measuring a quantity of milk yielded by an animal during a milking process, comprising
a container (201);
a supply unit (202) configured to supply milk to the container (201) and connectable to a milking unit of a milking machine;
a discharge unit (211) configured to discharge milk from the container (201) and connectable to a milking line of the milking machine which is adapted to have applied thereto a milking vacuum, wherein the discharge unit (211) comprises means (213) for changing the size of a discharge opening through which the milk flows when it is being discharged from the container (201), wherein at least two different sizes of the discharge opening, which allow the milk to flow through the discharge opening, can be set;
a filling level measuring device (211) configured to measure a filling level of the milk in the container (201); and
a control unit (236) configured to control the means (213) for changing the size of the discharge opening in dependence on the milk level in the container (201) determined by the filling level measuring device (219), in order to set the size of the discharge opening such that the filling level remains within a predetermined range;
**characterized by**
an evaluation unit (237) configured to calculate a milk flow into the container (201) on the basis of the set size of the discharge opening and of the filling level measured by the filling level measuring device (219).

2. The apparatus (200, 500, 600) according to claim 1, wherein the control unit (236) is configured to enlarge the discharge opening when the filling level of the container (201) exceeds a predetermined upper threshold value, and to reduce the discharge opening when the filling level falls below a predetermined lower threshold value, and wherein the control unit (236) is configured to determine, on the basis of the milk flow calculated by the evaluation unit (237), when the upper threshold value is exceeded and/or the lower threshold value is not reached, whether in the one of the at least two sizes of the discharge opening a balance between the milk flow into the container (201) and the milk flow out of the container (201) is established and, if this is the case, to set this size of the discharge opening.

3. The apparatus (200, 500, 600) according to claim 1 or 2, wherein the means (213) for changing the size of the discharge opening are configured such that three or more different sizes of the discharge opening, which allow the milk to flow through, are settable.

4. The apparatus (200, 500) according to one of claims 1 to 3, wherein at least one of, in particular each of, the settable sizes of the discharge opening allowing the milk to flow through the discharge opening is adapted such that, at a milk flow into the container (201) in a sub-range of a range of 0.5 kg/min to 12 kg/min, a balance is established between the milk flow into the container (201) and the milk flow out of the container (201) when the filling level is in the predetermined range.

5. The apparatus (200, 500) according to one of the preceding claims, wherein the means (213) for changing the size of the discharge opening comprise:

   a disk (214) with at least two openings (401 to 407) of different sizes, the disk (214) being disposed in front of an opening (215) of the discharge unit (211) and being movable relative to the opening (215) of the discharge unit (211) such that, by moving the disk (214), each of the at least two openings (401 to 407) of the disk (214) can be placed in front of the opening (215) of the discharge unit (211), so that the milk, when it is being discharged from the container (201), flows through one of the at least two openings (401 to 407) of the disk (214) placed in front of the opening (215) of the discharge unit (211); and
   a disk driving means (218) for moving the disk (214) relative to the opening (215) of the discharge unit (211); wherein, optionally, the disk (214) is rotatable about an axis (217) perpendicular to a bottom face of the disk (214), the at least two openings (401 to 407) of the disk (214) are disposed around the axis (217), and the bottom face of the disk (214) is in contact with a rim of the opening (215) of the discharge unit (211).

6. The apparatus (200, 500) according to claim 5, wherein the container (201) has a vertical direction (507), wherein at least in an area of the container (201) between a filling height corresponding to a minimum filling level and a filling height corresponding to a maximum filling level, a cross-sectional area of an inner space of the container (201) is constant in each plane which is perpendicular to the vertical direction (507) and intersects the container (201) within the area between the filling heights corresponding to the minimum filling level and to the maximum filling level, and wherein the axis (217) about which the disk (214) is rotatable is inclined relative to the vertical direction (507) of the container (201), in particular perpendicular thereto.

7. The apparatus (200, 500) according to one of claims 5 and 6, wherein the disk (214) comprises an area (408) where no opening is provided, in particular adjacent a largest one of the at least two openings (401 to 407), and wherein the disk (214) is movable relative to the discharge unit (211) such that said area (408) of the disk (214) where no opening is provided can be placed in front of the opening (215) of the discharge unit (211) by moving the disk (214) in order to close the opening (215) of the discharge unit (211).

8. The apparatus according to one of claims 5 to 7, wherein the disk (214) comprises a plurality of openings (401 to 407) whose size is configured such that, at a predetermined filling level of the container (201), flow rates of the milk through two respective adjacent openings (401 to 407) differ from each other by a predetermined flow rate difference, wherein, optionally, a ratio between a difference of a quantity of milk in the container (201) at a maximum filling level and a quantity of milk in the container (201) at a minimum filling level on the one hand and the flow rate difference on the other hand is greater than 20 seconds.

9. The apparatus (200, 500, 600) according to one of claims 1 to 8, comprising additionally an inclination sensor (239), the evaluation unit (237) being adapted to perform a correction of the calculated milk flow on the basis of an inclination (239) measured by the inclination sensor.

10. The apparatus (200, 500, 600) according to one of claims 1 to 9, wherein the discharge unit (211) comprises a collection chamber (240) comprising a first inlet connected to the discharge opening, a second inlet connected to a bypass line (207) for transport air that is separated from the milk and an outlet connectable to the milking line of the milking machine, said apparatus comprising a device (241) for closing the outlet.

11. A method for measuring a quantity of milk yielded by an animal during a milking process, said method comprising:

feeding the milk yielded by an animal during the milking process into a container (201);
measuring a filling level of the milk in the container (201); and
changing a size of a discharge opening through which milk can flow out of the container (201) in dependence on a measured filling level of the milk in the container (201), wherein the discharge opening is configured such that at least two different sizes of the discharge opening, which allow milk to flow through the discharge opening, are settable, and wherein the size of the discharge opening is set such that the filling level of the milk in the container (201) remains within a predetermined range;
**characterized by**
calculating a milk flow into the container (201) on the basis of the set size of the discharge opening and the measured filling level.

12. The method according to claim 11, wherein the size of the discharge opening is enlarged when the filling level of the container (201) exceeds a predetermined upper threshold value, and the size of the discharge opening is reduced when the filling level of the container (201) is lower than a predetermined lower threshold value; and
wherein, if the upper threshold value is exceeded and/or the lower threshold value is not reached, it is determined on the basis of the calculated milk flow into the container (201) whether for one of the at least two sizes of the discharge opening a balance between the milk flow into the container (201) and the milk flow out of the container (201) is established and, if this is the case, this size of the discharge opening is set.

13. The method according to claim 11 or 12, wherein the discharge opening is configured such that three or more different sizes of the discharge opening, which allow the milk to flow through the discharge opening, are settable.

14. The method according to one of claims 11 to 13, wherein the at least one of, in particular each of, the settable sizes of the discharge opening allowing the milk to flow through the discharge opening is configured such that, at a milk flow into the container (201) in a sub-range of a range from 0.5 kg/min to 12 kg/min, a balance is established between the milk flow into the container (201) and the milk flow out of the container (201) when the filling level is in the predetermined range.

15. The method according to one of claims 11 to 14, further comprising a calculation of the total quantity of milk yielded by an animal during the milking process by temporal integration of a milk flow out of the container (201), calculated on the basis of the size of the discharge opening and the filling level.

16. The method according to one of claims 11 to 15, wherein changing the size of the discharge opening comprises moving a disk (214) with two or more openings (401 to 407) of different size which is disposed in front of an opening (215) of a discharge unit (211) of the container (201), wherein one of the openings (401 to 407) of the disk (214) is placed in front of the opening (215) of the discharge unit (211) of the container (201) so that milk can flow out of the container (201) through the opening (401 to 407) of the disk (214).

17. The method according to one of claims 11 to 16, wherein calculating the milk flow comprises:

determining a temporal change of the quantity of milk in the container (201) on the basis of a temporal change of the filling level;

determining a discharge rate from the container (201) on the basis of the size of the discharge opening and of the filling level; and

calculating a sum of the temporal change of the quantity of milk in the container (201) and of the discharge rate.

**18.** The method according to one of claims 11 to 17, wherein an inclination of the container (201) is measured and a correction of the measured quantity of milk is performed on the basis of the measured inclination.

**Revendications**

**1.** Dispositif (200, 500, 600) destiné à la mesure d'une quantité de lait délivrée par un animal lors d'une opération de traite, comprenant :

un récipient (201) ;

une unité d'amenée (202), qui est configurée pour amener du lait dans le récipient (201) et peut être reliée à un appareillage de traite d'une machine de traite ;

une unité d'évacuation (211), qui est configurée pour évacuer du lait du récipient (201), et peut être reliée à une conduite de traite de la machine de traite, qui peut être soumise à un vide de traite, l'unité d'évacuation (211) comprenant des moyens (213) pour faire varier une grandeur d'une ouverture d'écoulement d'évacuation à travers laquelle s'écoule le lait lors de l'évacuation du récipient (201), au moins deux grandeurs différentes de l'ouverture d'écoulement d'évacuation, qui permettent un écoulement de lait à travers l'ouverture d'écoulement d'évacuation, pouvant être réglées ;

un dispositif de mesure de niveau de remplissage (219), qui est conçu pour mesurer un niveau de remplissage de lait dans le récipient (201) ; et

une unité de commande (236), qui est conçue pour commander les moyens (213) pour faire varier la grandeur de l'ouverture d'écoulement d'évacuation en fonction du niveau de remplissage du lait dans le récipient (201), qui a été mesuré par le dispositif de mesure de niveau de remplissage (19), en vue de régler la grandeur de l'ouverture d'écoulement d'évacuation de manière à ce que le niveau de remplissage reste dans une zone prédéterminée ;

**caractérisé par**

une unité de traitement de données (237), qui est conçue pour calculer, à partir de la grandeur réglée de l'ouverture d'écoulement d'évacuation et du niveau de remplissage mesuré par le dispositif de mesure de niveau de remplissage (219), un débit de lait entrant dans le récipient (201).

**2.** Dispositif (200, 500, 600) selon la revendication 1, dans lequel l'unité de commande (236) est configurée pour agrandir l'ouverture d'écoulement d'évacuation lorsque le niveau de remplissage du récipient (201) dépasse une valeur limite supérieure prédéterminée, et pour diminuer l'ouverture d'écoulement d'évacuation lorsque le niveau de remplissage passe sous une valeur limite inférieure prédéterminée, et

dans lequel l'unité de commande (236) est configurée pour déterminer, lors du dépassement de la valeur limite supérieure et/ou lors du passage sous la valeur limite inférieure, sur la base du débit de lait calculé par l'unité de traitement de données (237), si pour l'une desdites au moins deux grandeurs de l'ouverture d'écoulement d'évacuation, il s'établit un équilibre entre le débit de lait rentrant dans le récipient (201) et le débit de lait sortant du récipient (201), et, si tel est le cas, de régler cette grandeur de l'ouverture d'écoulement d'évacuation.

**3.** Dispositif (200, 500, 600) selon la revendication 1 ou la revendication 2, dans lequel les moyens (213) pour faire varier la grandeur de l'ouverture d'écoulement d'évacuation sont configurés de manière à pouvoir régler trois grandeurs différentes ou davantage de l'ouverture d'écoulement d'évacuation, qui permettent un écoulement de lait à travers l'ouverture d'écoulement d'évacuation.

**4.** Dispositif (200, 500, 600) selon l'une des revendications 1 à 3, dans lequel au moins l'une, notamment chacune des grandeurs pouvant être réglées de l'ouverture d'écoulement d'évacuation, qui permettent un écoulement de lait à travers l'ouverture d'écoulement d'évacuation, est conçue de manière telle que, dans le cas d'un débit de lait rentrant dans le récipient (201), dans une plage partielle d'une plage allant de 0,5 kg/min à 12 kg/min, il s'établisse un équilibre entre le débit de lait entrant dans le récipient (201) et le débit de lait sortant du récipient (201) pour un niveau de remplissage dans la zone prédéterminée.

**5.** Dispositif (200, 500) selon l'une des revendications précédentes, dans lequel les moyens (213) pour faire varier une grandeur de l'ouverture d'écoulement d'évacuation, comprennent :

un disque (214) avec au moins deux ouvertures (401-407) de grandeur différente, le disque (214) étant agencé devant une ouverture (215) de l'unité d'évacuation (211) et étant mobile par rapport à l'ouverture (215) de l'unité d'évacuation (211), de manière telle que chacune desdites au moins deux ouvertures (401-407) du disque (214) puisse être amenée, par déplacement du disque (214), devant l'ouverture (215) de l'unité d'évacuation (211), de sorte que le lait, lors de son évacuation du récipient (201) s'écoule à travers une desdites au moins deux ouvertures (401-407) du disque (214), qui se trouve devant l'ouverture (215) de l'unité d'évacuation (211) ; et

un entraînement de disque (218) pour déplacer le disque (214) par rapport à l'ouverture (215) de l'unité d'évacuation (211) ;

le disque (214) étant optionnellement rotatif autour d'un axe (217) perpendiculaire à un côté inférieur du disque (214), lesdites au moins deux ouvertures (401-407) du disque (214) étant agencées autour de l'axe (217), et le côté inférieur du disque (214) étant en contact avec un bord de l'ouverture (215) de l'unité d'évacuation (211).

6.  Dispositif (200, 500) selon la revendication 5, dans lequel le récipient (201) présente une direction verticale (507), dans lequel au moins dans une zone du récipient (201), entre une hauteur de remplissage correspondant à un niveau de remplissage minimal et une hauteur de remplissage correspondant à un niveau de remplissage maximal, une surface de section transversale d'un espace intérieur du récipient (201) est constante dans chaque plan, qui est perpendiculaire à la direction verticale (507) et coupe le récipient (201) à l'intérieur de la zone entre les hauteurs de remplissage correspondant au niveau de remplissage minimal et maximal, et dans lequel l'axe (217) autour duquel peut tourner le disque (214), est incliné, en particulier perpendiculaire, par rapport à la direction verticale (507) du récipient (201).

7.  Dispositif (200, 500) selon l'une des revendications 5 et 6, dans lequel le disque (214) présente une zone (408) dans laquelle ne se trouve aucune ouverture, notamment à côté d'une plus grande desdites au moins deux ouvertures (401-407), et dans lequel le disque (214) est mobile par rapport à l'unité d'évacuation (211) de manière telle, que la zone (408) du disque (214) dans laquelle ne se trouve aucune ouverture, puisse être amenée, par déplacement du disque (214), devant l'ouverture (215) de l'unité d'évacuation (211), en vue de fermer l'ouverture (215) de l'unité d'évacuation (211).

8.  Dispositif (200, 500) selon l'une des revendications 5 à 7, dans lequel le disque (214) présente plusieurs ouvertures (401-407), dont la grandeur est conçue pour que des vitesses d'écoulement du lait à travers deux ouvertures (401-407) respectivement voisines se différencient, pour un niveau de remplissage prédéterminé du récipient (201), d'une différence de vitesse d'écoulement prédéterminée, et dans lequel de manière optionnelle, un rapport entre une différence d'une quantité de lait dans le récipient (201) pour un niveau de remplissage maximal et d'une quantité de lait dans le récipient (201) pour le niveau de remplissage minimal d'une part, et la différence de vitesses d'écoulement d'autre part, est supérieur à 20 secondes.

9.  Dispositif (200, 500, 600) selon l'une des revendications 1 à 8, qui comprend en supplément un capteur d'inclinaison (239) et dans lequel l'unité de traitement de données (237) est configurée pour effectuer une correction du débit de lait calculé sur la base d'une inclinaison mesurée par le capteur d'inclinaison (239).

10. Dispositif (200, 500, 600) selon l'une des revendications 1 à 9, dans lequel l'unité d'évacuation (211) comprend une chambre de collecte (240), qui comporte une première entrée reliée à l'ouverture d'écoulement d'évacuation, une deuxième entrée reliée à une conduite en dérivation (207) pour de l'air de transport que l'on sépare du lait, et une sortie pouvant être reliée à la conduite de traite de la machine de traite, et le dispositif comportant un système (241) pour fermer la sortie.

11. Procédé destiné à la mesure d'une quantité de lait délivrée par un animal lors d'une opération de traite, comprenant :

l'amenée du lait produit par l'animal lors de l'opération de traite, dans un récipient (201) ;
la mesure d'un niveau de remplissage du lait dans le récipient (201) ; et
la modification d'une grandeur d'une ouverture d'écoulement d'évacuation à travers laquelle peut s'écouler du lait hors du récipient (201) en fonction du niveau de remplissage mesuré du lait dans le récipient (201), l'ouverture d'écoulement d'évacuation étant configurée de manière telle qu'au moins deux grandeurs différentes de l'ouverture d'écoulement d'évacuation, qui permettent un écoulement de lait à travers l'ouverture d'écoulement d'évacuation, puissent être réglées, et la grandeur de l'ouverture d'écoulement d'évacuation étant réglée de manière à ce que le niveau de remplissage du lait dans le récipient (201) reste dans une zone prédéterminée ;
**caractérisé par**

le calcul d'un débit de lait entrant dans le récipient (201) à partir de la grandeur réglée de l'ouverture d'écoulement d'évacuation et du niveau de remplissage mesuré.

12. Procédé selon la revendication 11, d'après lequel la grandeur de l'ouverture d'écoulement d'évacuation est agrandie lorsque le niveau de remplissage du récipient (201) dépasse une valeur limite supérieure prédéterminée, et la grandeur de l'ouverture d'écoulement d'évacuation est diminuée lorsque le niveau de remplissage du récipient (201) passe sous une valeur limite inférieure prédéterminée ; et

d'après lequel, lors du dépassement de la valeur limite supérieure et/ou lors du passage sous la valeur limite inférieure, on détermine, sur la base du débit de lait entrant dans le récipient (201) calculé, si pour l'une desdites au moins deux grandeurs de l'ouverture d'écoulement d'évacuation, il s'établit un équilibre entre le débit de lait rentrant dans le récipient (201) et le débit de lait sortant du récipient (201), et, si tel est le cas, on règle cette grandeur de l'ouverture d'écoulement d'évacuation.

13. Procédé selon la revendication 11 ou la revendication 12, d'après lequel l'ouverture d'écoulement d'évacuation est conçue de manière à pouvoir régler trois grandeurs différentes ou davantage de l'ouverture d'écoulement d'évacuation, qui permettent un écoulement de lait à travers l'ouverture d'écoulement d'évacuation.

14. Procédé selon l'une des revendications 11 à 13, d'après lequel au moins l'une, notamment chacune des grandeurs pouvant être réglées de l'ouverture d'écoulement d'évacuation, qui permettent un écoulement de lait à travers l'ouverture d'écoulement d'évacuation, est conçue de manière telle que, dans le cas d'un débit de lait rentrant dans le récipient (201), dans une plage partielle d'une plage allant de 0,5 kg/min à 12 kg/min, il s'établisse un équilibre entre le débit de lait entrant dans le récipient (201) et le débit de lait sortant du récipient (201) pour un niveau de remplissage dans la zone prédéterminée.

15. Procédé selon l'une des revendications 11 à 14, qui comprend, en outre, un calcul de la quantité de lait totale produite par l'animal lors de l'opération de traite, par intégration dans le temps d'un débit de lait sortant du récipient (201) calculé à partir de la grandeur de l'ouverture d'écoulement d'évacuation et du niveau de remplissage.

16. Procédé selon l'une des revendications 11 à 15, d'après lequel la modification ou variation de la grandeur de l'ouverture d'écoulement d'évacuation comprend un déplacement d'un disque (214), qui comporte deux ouvertures (401-407) ou davantage, de grandeur différente, et est placé devant une ouverture (215) d'une unité d'évacuation (211) du récipient (201), et d'après lequel l'une des ouvertures (401-407) du disque (214) est amenée devant l'ouverture (215) de l'unité d'évacuation (211) du récipient (201), de sorte que le lait peut s'écouler hors du récipient (201) à travers l'ouverture (401-407) du disque (214).

17. Procédé selon l'une des revendications 11 à 16, d'après lequel le calcul du débit de lait comprend :

la détermination d'une variation dans le temps de la quantité de lait dans le récipient (201) sur la base d'une variation dans le temps du niveau de remplissage ;
la détermination d'une vitesse d'écoulement d'évacuation hors du récipient (201) sur la base de la grandeur de l'ouverture d'écoulement d'évacuation et du niveau de remplissage ; et
le calcul d'une somme de la variation dans le temps de la quantité de lait dans le récipient (201) et de la vitesse d'écoulement d'évacuation.

18. Procédé selon l'une des revendications 11 à 17, d'après lequel on mesure une inclinaison du récipient (201), et on effectue une correction du débit de lait mesuré sur la base de l'inclinaison mesurée.

FIG. 1
(Stand der Technik)

FIG. 2

FIG. 3

FIG. 4

FIG. 5

FIG. 6a

EP 2 373 155 B1

EP 2 373 155 B1

FIG. 6b

FIG. 6c

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3118865 A1
- US 3919975 A
- DE 3101302 A1
- EP 0382852 A1
- US 6497143 B1